# EUROPEAN PATENT APPLICATION

(11) **EP 4 496 394 A1**
(43) Date of publication of application: **22.01.2025**
(21) Application number: 23778506.8
(22) Date of filing: 31.03.2023
(51) Int. Cl.: H04W 56/00

(54) **CARRIER DETERMINATION METHOD AND APPARATUS, AND TERMINAL AND READABLE STORAGE MEDIUM**

(30) Priority: 02.04.2022 CN 202210352112
(71) Applicant: VIVO MOBILE COMMUNICATION CO., LTD., Dongguan, Guangdong 523863 (CN)
(72) Inventor: LI, Ping, Dongguan, Guangdong 523863 (CN); LIU, Siqi, Dongguan, Guangdong 523863 (CN); JI, Zichao, Dongguan, Guangdong 523863 (CN)
(74) Representative: Murgitroyd & Company
(86) International application number: PCT/CN2023/085689
(87) International publication number: WO 2023/186142

(57) **Abstract**

This application pertains to the field of communication technologies, and discloses a carrier determining method and a terminal (400, 500). The carrier determining method in embodiments of this application includes: determining (201), by a terminal (11), a second carrier and/or a plurality of third carriers from a plurality of first carriers based on first information of at least some carriers in the plurality of first carriers, where the second carrier is used to determine synchronization information of the second carrier and/or synchronization information of a fourth carrier; the plurality of third carriers are used for SL transmission; the plurality of first carriers meet a first condition; and the plurality of third carriers meet a second condition.

## Description

### CROSS-REFERENCE TO RELATED APPLICATIONS

This application claims priority to Chinese Patent Application No. 202210352112.8, filed in China on April 2, 2022, which is incorporated herein by reference in its entirety.

### TECHNICAL FIELD

This application pertains to the field of communication technologies, and specifically relates to a carrier determining method and apparatus, a terminal, and a readable storage medium.

### BACKGROUND

Currently, when a carrier aggregation technology is applied to a new radio (New Radio, NR) sidelink (Sidelink), a series of problems, such as half-duplex transmission and reception and transmit power attenuation, may be caused due to inconsistent timings of synchronization references between different carriers, hence affecting transmission efficiency of a communication system.

Therefore, how to implement timing synchronization between carriers has become an urgent problem to be resolved.

### SUMMARY

Embodiments of this application provide a carrier determining method and apparatus, a terminal, and a readable storage medium, to resolve a problem that transmission efficiency of a communication system is low due to inconsistent timings of synchronization references between different carriers.

According to a first aspect, a carrier determining method is provided. The method includes:
determining, by a terminal, a second carrier and/or a plurality of third carriers from a plurality of first carriers based on first information of at least some carriers in the plurality of first carriers, where
the second carrier is used to determine synchronization information of the second carrier and/or synchronization information of a fourth carrier;
the plurality of third carriers are used for sidelink SL transmission;
the plurality of first carriers meet a first condition; and
the plurality of third carriers meet a second condition.

According to a second aspect, a carrier determining apparatus is provided. The apparatus includes:
a determining module, configured to determine a second carrier and/or a plurality of third carriers from a plurality of first carriers based on first information of at least some carriers in the plurality of first carriers, where
the second carrier is used to determine synchronization information of the second carrier and/or synchronization information of a fourth carrier;
the plurality of third carriers are used for sidelink SL transmission;
the plurality of first carriers meet a first condition; and
the plurality of third carriers meet a second condition.

According to a third aspect, a terminal is provided. The terminal includes a processor and a memory. The memory stores a program or instructions capable of running on the processor. When the program or instructions are executed by the processor, the steps of the method according to the first aspect are implemented.

According to a fourth aspect, a terminal is provided and includes a processor and a communication interface. The processor is configured to determine a second carrier and/or a plurality of third carriers from a plurality of first carriers based on first information of at least some carriers in the plurality of first carriers, where
the second carrier is used to determine synchronization information of the second carrier and/or synchronization information of a fourth carrier;
the plurality of third carriers are used for sidelink SL transmission;
the plurality of first carriers meet a first condition; and
the plurality of third carriers meet a second condition.

According to a fifth aspect, a communication system is provided and includes a terminal and a network-side device. The terminal may be configured to perform the steps of the carrier determining method according to the first aspect.

According to a sixth aspect, a readable storage medium is provided. The readable storage medium stores a program or instructions. When the program or instructions are executed by a processor, the steps of the method according to the first aspect are implemented.

According to a seventh aspect, a chip is provided. The chip includes a processor and a communication interface. The communication interface is coupled to the processor. The processor is configured to run a program or instructions to implement the method according to the first aspect.

According to an eighth aspect, a computer program or program product is provided. The computer program or program product is stored in a storage medium. The computer program or program product is executed by at least one processor to implement the steps of the carrier determining method according to the first aspect.

In the embodiments of this application, the terminal determines the second carrier and/or the plurality of third carriers from the plurality of first carriers based on the first information of at least some carriers in the plurality of first carriers, where the second carrier is used to determine the synchronization information of the second carrier and/or the synchronization information of the fourth carrier; the plurality of third carriers are used for sidelink SL transmission; the plurality of first carriers meet the first condition; and the plurality of third carriers meet the second condition. By using this method, the terminal may determine the second carrier, and determine the synchronization information of the second carrier and synchronization information of other carriers by using the second carrier, and perform sidelink transmission by using the third carrier, so that timing synchronization of each carrier can be implemented during sidelink data transmission, thereby improving reliability of the communication system.

### BRIEF DESCRIPTION OF DRAWINGS

FIG. 1 is a block diagram of a wireless communication system to which an embodiment of this application can be applied;
FIG. 2 is a schematic diagram of a carrier determining method according to an embodiment of this application;
FIG. 3 is a schematic diagram of a structure of a carrier determining apparatus according to an embodiment of this application;
FIG. 4 is a schematic diagram of a structure of a communication device according to an embodiment of this application; and
FIG. 5 is a schematic diagram of a hardware structure of a terminal according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "and/or" in the specification and claims indicates at least one of connected objects, and the character "/" generally represents an "or" relationship between associated objects.

It should be noted that technologies described in the embodiments of this application are not limited to a long term evolution (Long Term Evolution, LTE)/LTE-Advanced (LTE-Advanced, LTE-A) system, and can also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. The described technologies may be used for the foregoing systems and radio technologies, and may also be used for other systems and radio technologies. However, in the following descriptions, the new radio (New Radio, NR) system is described for an illustrative purpose, and NR terms are used in most of the following descriptions. These technologies may also be applied to other applications than an NR system application, for example, a 6th Generation (6th Generation, 6G) communication system.

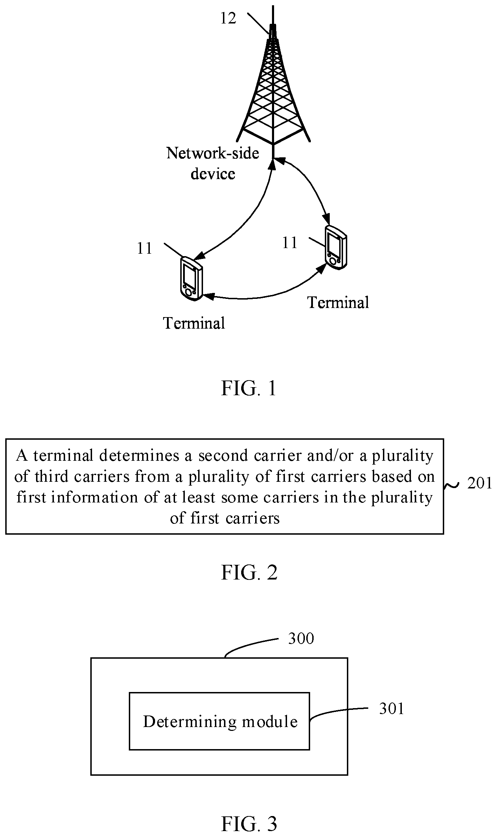

FIG. 1 is a block diagram of a wireless communication system to which an embodiment of this application may be applied. The wireless communication system includes a terminal 11 and a network-side device 12. The terminal 11 may be a terminal-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR) or virtual reality (virtual reality, VR) device, a robot, a wearable device (Wearable Device), vehicle user equipment (VUE), pedestrian user equipment (PUE), a smart home (a home device having a wireless communication function, such as a refrigerator, a television, a washing machine, or furniture), a game console, a personal computer (personal computer, PC), a teller machine, or a self-service machine. The wearable device includes a smartwatch, a smart band, a smart headphone, smart glasses, smart jewelry (a smart bracelet, a smart wrist chain, a smart ring, a smart necklace, a smart anklet, a smart ankle chain, or the like), a smart wristband, smart clothing, or the like. It should be noted that a specific type of the terminal 11 is not limited in the embodiments of this application. The network-side device 12 may include an access network device or a core network device. The access network device 12 may also be referred to as a radio access network device, a radio access network (Radio Access Network, RAN), a radio access network function, or a radio access network element. The access network device 12 may include a base station, a WLAN access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. As long as the same technical effect is achieved, the base station is not limited to specific technical terms. It should be noted that in the embodiments of this application, only a base station in an NR system is used as an example for description, but a specific type of the base station is not limited.

The following describes some technical terms used in the embodiments of this application.

### 1. Carrier aggregation

To meet requirements for a downlink peak rate of 1 Gbps and an uplink peak rate of 500 Mbps in LTE-A, it is necessary to provide a maximum transmission bandwidth of 100 MHz. However, due to scarcity of continuous spectrums with such a large bandwidth, a carrier aggregation solution is proposed in LTE-A.

Carrier aggregation (Carrier Aggregation, CA) is to aggregate two or more component carriers (Component Carrier, CC) to support a larger transmission bandwidth (up to 100 MHz). Actually, each component carrier corresponds to one independent cell. Generally, one component carrier may be equivalent to one cell. A maximum bandwidth of each component carrier is 20 MHz. To efficiently use fragmented spectrums, carrier aggregation supports aggregation between different component carriers:
(1) component carriers with the same or different bandwidths;
(2) adjacent or non-adjacent component carriers in a same frequency band; and
(3) component carriers in different frequency bands.

It should be noted that from a perspective of baseband (baseband) implementation, there is no difference between these cases. This mainly affects implementation complexity of radio frequency units.

### 2. Sidelink

A long term evolution (Long Term Evolution, LTE) system supports sidelink (sidelink, SL) transmission from Release 12, where the sidelink transmission is used for direct data transmission between terminal user equipments (User Equipment, UE) without using a network device.

An LTE sidelink design supports two resource allocation modes: a scheduled resource allocation (Scheduled resource allocation) mode and an autonomous resource selection (autonomous resource selection) mode. In the former mode, a resource is allocated to each UE under control of a network-side device. In the latter mode, the UE autonomously selects a resource.

Starting from Release 15, LTE supports sidelink carrier aggregation (Carrier Aggregation, CA). Different from CA on a Uu interface (that is, downlink and uplink), CA on an LTE sidelink does not distinguish between a primary component carrier (Primary component carrier, PCC) and a secondary component carrier (Secondary component carrier, SCC). The UE in the autonomous resource selection mode independently performs resource sensing (sensing) and resource reservation on each CC.

The LTE sidelink design is applicable to specific public safety affairs (such as emergency communication in disaster places such as fire or earthquake) or vehicle to everything (vehicle to everything, V2X) communication. Vehicle to everything communication includes various services, such as basic security communication, advanced (autonomous) driving, platooning, and sensor expansion. The LTE sidelink supports only broadcast communication, and therefore is mainly used for basic security communication. Other advanced V2X services are supported by an NR sidelink.

A 5G NR system may be used in an operating band above 6 GHz that is not supported by LTE, and supports a larger operating bandwidth. The NR system also supports sidelink interface communication for direct communication between terminals.

### 3. NR sidelink synchronization process

Sidelink communication needs to consider different communication scenarios, such as within network coverage, beyond network coverage, partial network coverage, and terminals located in different cells. In sidelink communication, synchronization is required between terminals to ensure normal sending and reception of data. Therefore, synchronization between terminals is required in various scenarios.

In cellular communication, a terminal only needs to receive a synchronization signal from a network and achieve synchronization with the network for communication. In sidelink communication, because a terminal may be located in a cell or outside a cell, and two terminals performing sidelink communication may be located in a same cell or different cells, or one of the terminals is located in a cell, the other is located outside the cell, or both are located outside the cell, various synchronization references are introduced in sidelink communication to meet communication requirements in various scenarios. A synchronization reference is a device that can provide synchronization information. Types of synchronization references supported in an NR sidelink system may include a global navigation satellite system (global navigation satellite system, GNSS), an eNB, a gNB, UE, a terminal internal clock, and the like.

The terminal first searches for synchronization references before performing sidelink communication. Because there are many types of synchronization references, the terminal may search out different types of synchronization references, and the different types of synchronization references may be asynchronous. In this case, due to possible time asynchronization between terminals synchronized to different types of synchronization references, the terminals cannot perform sidelink communication with each other. Therefore, priorities of synchronization references are defined in sidelink communication, and the terminal selects a synchronization reference with a highest priority, so that global synchronization can be maintained in sidelink communication as much as possible, thereby avoiding a problem that transmission efficiency or reliability is reduced due to asynchronization.

The synchronization reference priorities defined in the NR sidelink system are shown in the following table 1.

**Table 1**

| GNSS-based synchronization | gNB/eNB-based synchronization |
|---|---|
| P0: GNSS | P0': gNB/eNB |
| P1: UE synchronized directly to the GNSS | P1': UE synchronized directly to the gNB/eNB |
| P2: UE synchronized indirectly to the GNSS | P2': UE synchronized indirectly to the gNB/eNB |
| P3: gNB/eNB | P3': GNSS |
| P4: UE synchronized directly to the gNB/eNB | P4': UE synchronized directly to the GNSS |
| P5: UE synchronized indirectly to the gNB/eNB | P5': UE synchronized indirectly to the GNSS |
| P6: Remaining UEs | P6': Remaining UEs |

Because the GNSS and the gNB/eNB may be asynchronous, when the GNSS is configured with a highest priority in the NR sidelink system, invalidation of P3/P4/P5 based on network configuration information or preconfiguration information may be supported, that is, only P0/P1/P2/P6 is included. In this case, synchronization information of all terminals (excluding a terminal that obtains synchronization information based on a terminal internal clock) is obtained based on the GNSS. This can ensure that all the terminals are synchronous. When the gNB/eNB is configured with the highest priority, P3'/P4'/P5' cannot be invalidated because all terminals beyond the network coverage still need to obtain synchronization information based on the GNSS.

Before performing sidelink communication, the terminal needs to first determine a synchronization reference and obtain synchronization information based on the synchronization reference. Then the terminal that meets a condition sends a sidelink synchronization signal SLSS and a sidelink broadcast channel PSBCH on the sidelink to assist other terminals in performing synchronization. The terminal needs to determine, based on the synchronization reference, an SLSS identity ID corresponding to the SLSS sent by the terminal, determine content of the PSBCH based on the synchronization reference, and determine a synchronization reference for sending the SLSS and PSBCH.

### 4. LTE V2X synchronization carrier selection process

In an LTE V2X carrier aggregation design, from a perspective of transmit-end UE, aggregated carriers all refer to a same synchronization reference, to achieve timing synchronization on the aggregated carriers. A specific process is that UE selects a synchronization carrier, uses a synchronization reference corresponding to the synchronization carrier as a synchronization reference of other aggregated carriers, and determines timings of the other carriers based on a timing corresponding to the synchronization carrier.

To implement a synchronization carrier selection, a set (Set) A is defined, where set A includes carriers that can potentially be used as the synchronization carrier (carriers that can potentially be used as the synchronization carrier). The UE selects set B from set A, where set B includes an available set of synchronization carriers (the available set of synchronization carriers), and then the UE selects a synchronization carrier from set B.

In an example, the terminal obtains a synchronization parameter based on a network configuration, including a synchronization reference type (typeTxSync) parameter, where the synchronization reference type parameter indicates that the terminal preferentially selects the eNB or GNSS as a synchronization reference, that is, the eNB or GNSS is configured with a higher priority. The following provides several examples in which the terminal determines the synchronization carrier based on the synchronization reference type parameter.

For example, if the parameter typeTxSync is set to eNB, the terminal selects a CC from an intersection between set A and CCs used for sidelink transmission as the synchronization carrier.

For example, if the parameter typeTxSync is set to GNSS, and a GNSS signal is reliable, the terminal selects a CC whose GNSS is reliable from an intersection between set A and CCs used for sidelink transmission as the synchronization carrier.

For example, if the parameter typeTxSync is set to GNSS, and a GNSS signal is unreliable, the terminal selects each CC in an intersection between set A and CCs used for sidelink transmission as the synchronization reference. There are two cases in this example:
Case 1: If a synchronization reference of at least one CC is UE synchronized directly or indirectly to the GNSS, the terminal selects a CC from the CCs whose synchronization reference is the UE synchronized directly or indirectly to the GNSS, as the synchronization carrier.
Case 2: If synchronization references of all CCs are the eNB, the terminal selects a CC from an intersection between set A and CCs used for sidelink transmission as the synchronization carrier.

In another example, the terminal obtains a synchronization parameter based on the network configuration, where the synchronization parameter includes a synchronization reference type (typeTxSync) parameter. The following provides several other examples in which the terminal determines the synchronization carrier based on the synchronization reference type parameter:

For example, if the parameter typeTxSync is set to eNB, the terminal selects each CC in an intersection between set A and CCs as the synchronization reference, and selects a CC with a highest priority as the synchronization carrier based on the following priorities:
P1: a CC whose synchronization reference is UE synchronized directly to the eNB;
P2: a CC whose synchronization reference is UE synchronized indirectly to the eNB;
P3: a CC whose synchronization reference is the GNSS;
P4: a CC whose synchronization reference is UE synchronized directly to the GNSS of the eNB;
P5: a CC whose synchronization reference is UE synchronized indirectly to the GNSS of the eNB; and
P6: a CC whose synchronization reference is the remaining UEs.

For example, if the parameter typeTxSync is set to GNSS, and a GNSS signal is reliable, the terminal selects a CC whose GNSS is reliable from an intersection between set A and CCs used for sidelink transmission as the synchronization carrier.

For example, if the parameter typeTxSync is set to GNSS, and a GNSS signal is unreliable, the terminal selects each CC in an intersection between set A and CCs used for sidelink transmission as the synchronization reference, and selects a CC with a highest priority as the synchronization carrier based on the following priorities:
P1: a CC whose synchronization reference is UE synchronized directly to the eNB;
P1: a CC whose synchronization reference is UE synchronized directly to the GNSS;
P2: a CC whose synchronization reference is UE synchronized indirectly to the eNB;
P2: a CC whose synchronization reference is UE synchronized indirectly to the GNSS; and
P3: a CC whose synchronization reference is remaining UEs.

A carrier determining method provided in the embodiments of this application is hereinafter described in detail by using some embodiments and application scenarios thereof with reference to the accompanying drawings.

In the related art, when a carrier aggregation technology is applied to an NR sidelink, a series of problems, such as half-duplex transmission and reception and transmit power attenuation, may be caused due to misaligned timings between different carriers, hence affecting transmission efficiency of an NR sidelink system. Therefore, different carriers should use a same synchronization reference for timing synchronization. Specifically, a terminal may select a synchronization carrier, and use a synchronization parameter of the synchronization carrier as a synchronization reference of other aggregated carriers, so that timing synchronization of all aggregated carriers is achieved based on the same synchronization reference, thereby achieving timing synchronization on all the aggregated carriers.

Further, synchronization or sidelink transmission configurations of the carriers may be different. For example, when a GNSS is configured with a highest priority, P3/P4/P5 may be invalidated based on network information or preconfiguration information, that is, sl-NbAsSync configurations of different carriers are different. Therefore, synchronization reference priority orders of the carriers may be different. For example, CC 1 is configured with sl-NbAsSync true, a synchronization reference priority order of CC 1 is P0/P1/P2/P3/P4/P5/P6, and a synchronization reference is P3. CC 3 is configured with sl-NbAsSync false, a synchronization reference priority order of CC 3 is P0/P1/P2/P6, and a synchronization reference is P6. If CC 1 is selected as a synchronization carrier, the terminal uses the synchronization reference of CC 1 as the synchronization reference of CC 3, that is, determines that the synchronization reference of CC 3 is P3. Because the sl-NbAsSync configuration of CC 3 indicates that CC 3 is not allowed to use a network as the synchronization reference, that is, P3/P4/P5 is invalid, the synchronization reference P3 determined by the terminal for CC 3 conflicts with the sl-NbAsSync configuration of CC 3. A possible problem in the foregoing solution is that a terminal supporting operation only in an intelligent transportation system (Intelligent Transportation System, ITS) frequency band may not support the implementation of using the network as a (direct/indirect) synchronization reference. Therefore, it is impossible to implement synchronization based on P3/P4/P5, and it is also impossible to implement synchronization with a carrier using P3/P4/P5 as a synchronization reference.

An embodiment of this application provides a carrier determining method. As shown in FIG. 2, the carrier determining method provided in this embodiment of this application may include the following step 201.

Step 201: A terminal determines a second carrier and/or a plurality of third carriers from a plurality of first carriers based on first information of at least some carriers in the plurality of first carriers.

In this embodiment of this application, the second carrier is used to determine synchronization information of the second carrier and/or synchronization information of a fourth carrier.

In this embodiment of this application, the plurality of third carriers are used for sidelink SL transmission. It should be noted that the SL transmission includes SL sending and/or SL receiving.

In this embodiment of this application, the plurality of first carriers meet a first condition.

In this embodiment of this application, the plurality of third carriers meet a second condition.

In other words, when the terminal performs an SL CA or SL multi-carrier operation, these carriers need to meet the first condition, and/or a network configuration or a preconfiguration ensures that the carriers that can be used for the SL CA or SL multi-carrier operation meet the second condition.

Optionally, in this embodiment of this application, the synchronization information is used for transmission timing synchronization between carriers used for CA transmission and/or multi-carrier transmission and/or SL transmission.

Optionally, in this embodiment of this application, the synchronization information includes at least one of the following:
a synchronization reference;
timing information; and
time-frequency information.

It should be noted that the synchronization reference is a device that can provide synchronization information, and that synchronization reference types supported in a new radio NR sidelink (Sidelink, SL) system include a GNSS, an eNB, a gNB, UE, and a terminal internal clock. Synchronization between carriers can be implemented by using a synchronization reference of a synchronization carrier as a synchronization reference of other carriers.

Optionally, in this embodiment of this application, the UE may include at least one of the following: UE synchronized directly to the GNSS, UE synchronized indirectly to the GNSS, UE synchronized directly to the gNB/eNB, UE synchronized indirectly to the gNB/eNB, and remaining SyncRef UEs.

In this embodiment of this application, the synchronization reference may also be referred to as a synchronization reference source.

In this embodiment of this application, the second carrier may include at least one of the following: a synchronization carrier, a reference carrier, and a primary carrier.

In this embodiment of this application, when the terminal performs SL transmission, an SL multi-carrier operation, or an SL CA operation, the terminal needs to ensure that some configurations between carriers are the same (for example, the configuration shown in the first information), or when the UE selects a synchronization carrier, some configurations between carriers need to be the same or different.

In this embodiment of this application, when the terminal performs SL transmission, an SL multi-carrier operation, or an SL CA operation on determined carriers, the terminal needs to ensure that some configurations between the determined carriers are the same (for example, the configuration shown in the first information), or when the UE selects a synchronization carrier, some configurations between carriers need to be the same or different.

Optionally, in this embodiment of this application, the second carrier is a first carrier. In other words, in this embodiment of this application, a network-side device directly uses the first carrier as the second carrier after ensuring that the configuration of the first carrier meets the first condition, so that the first carrier can be used as the second carrier for performing timing synchronization during data transmission or performing SL transmission.

Optionally, in this embodiment of this application, the plurality of first carriers may be preconfigured, or configured by the network, or indicated by the network, or selected by the terminal.

Optionally, in this embodiment of this application, the first condition includes at least one of the following:
synchronization reference orders of at least some carriers are the same, or synchronization reference orders of at least some carriers are different;
synchronization reference priority indication information of at least some carriers is the same, or synchronization reference priority indication information of at least some carriers is different;
first indication information of at least some carriers is the same, or first indication information of at least some carriers is different;
hybrid automatic repeat request (HARQ) configurations of at least some carriers are the same, or HARQ configurations of at least some carriers are different;
physical sidelink feedback channel (PSFCH) configurations of at least some carriers are the same, or PSFCH configurations of at least some carriers are different;
sub-carrier spacing (SCS) configurations of at least some carriers are the same, or SCS configurations of at least some carriers are different;
synchronization resources corresponding to at least some carriers are the same, or synchronization resources corresponding to at least some carriers are the same;
start symbols of at least some carriers are the same, or start symbols of at least some carriers are different; and
quantities of symbols occupied by at least some carriers are the same, or quantities of symbols occupied by at least some carriers are different.

Optionally, in this embodiment of this application, the second condition includes at least one of the following:
synchronization reference orders of at least some carriers are the same;
synchronization reference priority indication information of at least some carriers is the same;
first indication information of at least some carriers is the same;
HARQ configurations of at least some carriers are the same;
PSFCH configurations of at least some carriers are the same;
SCS configurations of at least some carriers are the same;
synchronization resources corresponding to at least some carriers are the same;
start symbols of at least some carriers are the same; and
quantities of symbols occupied by at least some carriers are the same.

For example, that synchronization reference orders of at least some carriers are the same includes that at least some carriers have same synchronization reference orders, or that at least some carriers have specific synchronization reference orders.

For example, that synchronization reference orders of at least some carriers are different includes that at least some carriers have different synchronization reference orders.

For example, that synchronization reference priority indication information of at least some carriers is the same includes that at least some carriers have same synchronization reference priority indication information, or that at least some carriers have specific synchronization reference priority indication information.

For example, that first indication information of at least some carriers is the same includes that at least some carriers have same first indication information, or that at least some carriers have specific first indication information.

For example, that synchronization reference priority indication information or first indication information of at least some carriers is different includes that at least some carriers have different synchronization reference priority indication information or first indication information.

For example, that HARQ configurations of at least some carriers are the same includes that at least some carriers have same HARQ configurations, or that at least some carriers have specific HARQ configurations.

For example, that PSFCH configurations of at least some carriers are the same includes that at least some carriers have same PSFCH configurations, or that at least some carriers have specific PSFCH configurations.

For example, that SCS configurations of at least some carriers are the same includes that at least some carriers have same SCS configurations, or that at least some carriers have specific SCS configurations.

For example, that HARQ configurations of at least some carriers are different includes that at least some carriers have different HARQ configurations.

For example, that PSFCH configurations of at least some carriers are different includes that at least some carriers have different PSFCH configurations.

For example, that SCS configurations of at least some carriers are different includes that at least some carriers have different SCS configurations.

For example, that synchronization resources (for example, configured or preconfigured synchronization resources) corresponding to at least some carriers are the same includes that at least some carriers correspond to same synchronization resources, or that at least some carriers correspond to specific synchronization resources.

Optionally, in this embodiment of this application, the third carrier may include at least one of the following:
a carrier in a second carrier set;
a carrier in a third carrier set;
all carriers available for carrier aggregation CA transmission;
a carrier actually used for CA transmission;
a carrier once selected for CA transmission;
all carriers available for multi-carrier transmission;
a carrier actually used for multi-carrier transmission;
a carrier once selected for multi-carrier transmission;
all carriers available for SL transmission;
a carrier actually used for SL transmission;
a carrier once selected for SL transmission; and
a carrier including a synchronization resource, where
the second carrier set includes carriers available as synchronization carriers, and the third carrier set includes an available set of synchronization carriers.

For example, the third carrier may be at least some carriers in each item above, or at least some carriers in a plurality of items above, or an intersection between a plurality of items above, or a subset of an intersection between a plurality of items above.

For example, the third carrier is some carriers in the second carrier set, or some carriers in the third carrier set, or some carriers in the second carrier set and some carriers in the third carrier set, or same carriers in the second carrier set and the third carrier set, that is, an intersection between the second carrier set and the third carrier set.

It should be noted that the second carrier set and the third carrier set are described above by using an example.

Optionally, in this embodiment of this application, the terminal may determine time-frequency information of the third carrier based on the synchronization information of the second carrier.

In a possible example, the terminal may use the synchronization information of the second carrier as synchronization information of the third carrier. For example, the terminal uses a synchronization reference of the second carrier as a synchronization reference of the third carrier.

In a possible example, the terminal obtains synchronization information of the third carrier based on the synchronization information of the second carrier. For example, the terminal obtains the time-frequency information of the third carrier based on the synchronization reference of the second carrier.

Optionally, in this embodiment of this application, the first information includes at least one of the following:
a synchronization reference order;
synchronization reference priority indication information;
first indication information;
a HARQ configuration;
a PSFCH configuration;
an SCS configuration;
an included synchronization resource;
a start symbol; and
a quantity of occupied symbols.

For example, the first indication information is used to indicate at least one of the following:
whether at least one specific synchronization reference needs to be monitored;
whether at least one specific synchronization reference needs to be skipped; and
whether to synchronize directly or indirectly to at least one specific synchronization reference.

For example, the HARQ configuration is used to indicate whether HARQ is enabled.

For example, the PSFCH configuration includes at least one of the following: a period of a PSFCH, a time domain position of the PSFCH, a frequency domain position of the PSFCH, configuration information indicating whether a PSFCH resource is configured, and a minimum interval between data and a corresponding PSFCH for feeding back the data.

For example, the minimum interval between the data and the corresponding PSFCH for feeding back the data may be 2 or 3.

For example, the synchronization resource includes at least one of the following: a period of a synchronization signal, a quantity of synchronization slots in the period of the synchronization signal, a quantity of repetitions of the synchronization signal, a synchronization slot offset, a time interval of the synchronization signal, and an SCS.

For example, the SCS includes at least one of the following: an SCS of the synchronization signal and an SCS of a carrier.

For example, the synchronization resource corresponding to the carrier may include a synchronization resource configured for the carrier, or a synchronization resource preconfigured for the carrier.

For example, the start symbol may be a start symbol of a sidelink.

For example, the quantity of occupied symbols may be a quantity of symbols occupied by the sidelink.

Optionally, in this embodiment of this application, the first information may be configured by the network side, indicated by the network side, or preconfigured.

In a possible example, that the plurality of third carriers meet a second condition may include at least one of the following:
synchronization reference orders of at least some carriers in the plurality of third carriers are the same;
synchronization reference priority indication information of at least some carriers in the plurality of third carriers is the same;
first indication information of at least some carriers in the plurality of third carriers is the same;
HARQ configurations of at least some carriers in the plurality of third carriers are the same;
PSFCH configurations of at least some carriers in the plurality of third carriers are the same;
SCS configurations of at least some carriers in the plurality of third carriers are the same;
synchronization resources corresponding to at least some carriers in the plurality of third carriers are the same;
start symbols of at least some carriers in the plurality of third carriers are the same; and
quantities of symbols occupied by at least some carriers in the plurality of third carriers are the same.

In a possible example, that the plurality of first carriers meet a first condition may include at least one of the following:
synchronization reference orders of at least some carriers in the plurality of first carriers are the same, or synchronization reference orders of at least some carriers in the plurality of first carriers are different;
synchronization reference priority indication information of at least some carriers in the plurality of first carriers is the same, or synchronization reference priority indication information of at least some carriers in the plurality of first carriers is different;
first indication information of at least some carriers in the plurality of first carriers is the same, or first indication information of at least some carriers in the plurality of first carriers is different;
HARQ configurations of at least some carriers in the plurality of first carriers are the same, or HARQ configurations of at least some carriers in the plurality of first carriers are different;
PSFCH configurations of at least some carriers in the plurality of first carriers are the same, or PSFCH configurations of at least some carriers in the plurality of first carriers are different;
SCS configurations of at least some carriers in the plurality of first carriers are the same, or SCS configurations of at least some carriers in the plurality of first carriers are different;
synchronization resources corresponding to at least some carriers in the plurality of first carriers are the same, or synchronization resources corresponding to at least some carriers in the plurality of first carriers are the same;
start symbols of at least some carriers in the plurality of first carriers are the same, or start symbols of at least some carriers in the plurality of first carriers are different; and
quantities of symbols occupied by at least some carriers in the plurality of first carriers are the same, or quantities of symbols occupied by at least some carriers in the plurality of first carriers are different.

Optionally, in this embodiment of this application, the plurality of first carriers may include at least one of the following:
a plurality of carriers used for CA transmission;
a plurality of carriers used for multi-carrier transmission;
a plurality of first carriers used for SL transmission;
a first carrier set;
a second carrier set (such as set A); and
a third carrier set (such as set B).

For example, the first carrier set in this specification is determined based on at least one of the following:
a carrier in the second carrier set;
a carrier in the third carrier set;
all carriers available for carrier aggregation CA transmission;
a carrier actually used for CA transmission;
a carrier once selected for CA transmission;
all carriers available for multi-carrier transmission;
a carrier actually used for multi-carrier transmission;
a carrier once selected for multi-carrier transmission;
all carriers available for SL transmission;
a carrier actually used for SL transmission;
a carrier once selected for SL transmission; and
a carrier including a synchronization resource.

For example, carriers in the first carrier set may be all or some carriers in any one of items above, or all or some carriers in any plurality of items above, or same carriers in any plurality of items above, or some of same carriers in any plurality of items above.

It may be understood that each item used to determine the first carrier set may be considered as a carrier set. In this case, the first carrier set may be any one of the plurality of carrier sets, or any plurality of the plurality of carrier sets, or a subset of any carrier set, or a subset of any plurality of the plurality of carrier sets, or an intersection between any plurality of the plurality of carrier sets, or a subset of an intersection between any plurality of the plurality of carrier sets.

For example, a plurality of carriers in the first carrier set may include: all carriers in set A.

For another example, the plurality of carriers in the first carrier set may include: some carriers in set A and some carriers in set B.

For another example, the plurality of carriers in the first carrier set may include: some carriers included in set A among carriers used for CA transmission.

For another example, the plurality of carriers in the first carrier set may include: some carriers configured with synchronization resources among all carriers that can potentially be used for CA transmission.

For another example, the plurality of carriers in the first carrier set may include: a carrier configured with a synchronization resource and once selected for SL transmission among all carriers that can potentially be used for SL transmission.

It should be noted that CA transmission in this specification may alternatively be SL CA transmission, and that multi-carrier transmission may alternatively be SL multi-carrier transmission.

Optionally, in this embodiment of this application, "A terminal determines a second carrier from a plurality of first carriers" in the foregoing step 201 may include the following step 201a.

Step 201a: The terminal determines the second carrier from the plurality of first carriers based on a first rule.

In some possible embodiments, the first rule includes at least one of the following:
determining the second carrier based on a selection priority;
determining that a carrier whose signal quality meets the first condition is the second carrier;
determining that a carrier whose searched time point meets the second condition is the second carrier;
determining that a carrier whose synchronization reference type priority meets a third condition is the second carrier;
determining that a carrier whose HARQ configuration is enabled or not enabled is the second carrier;
determining that a carrier whose period in a PSFCH configuration meets a fourth condition is the second carrier;
determining that a carrier whose resource pool meets a fifth condition is the second carrier;
determining that a carrier whose second priority meets a sixth condition is the second carrier; and
determining that a carrier whose synchronization resource meets a seventh condition is the second carrier.

For example, the second priority includes at least one of the following:
a priority or priority group of a synchronization reference;
a priority of a service; and
a priority of a synchronization resource.

For example, the synchronization resource includes at least one of the following:
a period of a synchronization signal;
a quantity of synchronization slots in the period of the synchronization signal;
a quantity of repetitions of the synchronization signal;
a synchronization slot offset;
a time interval of the synchronization signal; and
an SCS, where
the SCS includes at least one of the following: an SCS of an S-SSB and an SCS of a carrier.

In some possible embodiments, the carrier meeting the first condition includes at least one of the following:
a carrier with highest signal strength;
a carrier with lowest signal strength; and
a carrier whose signal strength is a first threshold.

In some possible embodiments, the carrier meeting the second condition includes at least one of the following:
a carrier whose searched time point is earliest;
a carrier whose searched time point is latest; and
a carrier whose searched time point is a predetermined time point.

In some possible embodiments, the carrier meeting the third condition includes at least one of the following:
a carrier whose synchronization reference type priority is highest;
a carrier whose synchronization reference type priority is lowest; and
a carrier whose synchronization reference type priority is a predetermined synchronization reference priority.

In some possible embodiments, the carrier meeting the fourth condition includes at least one of the following:
a carrier whose period in a PSFCH configuration is longest;
a carrier whose period in a PSFCH configuration is shortest; and
a carrier whose period in a PSFCH configuration is a first predetermined period.

In some possible embodiments, the carrier meeting the fifth condition includes at least one of the following:
a carrier including at least one resource pool with a PSFCH resource;
a carrier including at least one resource pool without a PSFCH resource;
a carrier including resource pools none of which has a PSFCH resource; and a carrier including resource pools all of which have PSFCH resources.

In some possible embodiments, the carrier meeting the sixth condition includes at least one of the following:
a carrier whose priority is highest;
a carrier whose priority is lowest; and
a carrier whose priority is a predetermined priority.

In some possible embodiments, the carrier meeting the seventh condition includes at least one of the following:
a carrier in which a period of a synchronization signal is longest;
a carrier in which a period of a synchronization signal is shortest;
a carrier in which a period of a synchronization signal is a second predetermined period;
a carrier in which a quantity of synchronization slots in a period is largest;
a carrier in which a quantity of synchronization slots in a period is smallest;
a carrier in which a quantity of synchronization slots in a period is a predetermined slot quantity;
a carrier in which a quantity of repetitions of a synchronization signal is largest;
a carrier in which a quantity of repetitions of a synchronization signal is smallest;
a carrier in which a quantity of repetitions of a synchronization signal is a predetermined repetition quantity;
a carrier in which a synchronization slot offset is largest;
a carrier in which a synchronization slot offset is smallest;
a carrier in which a synchronization slot offset is a predetermined offset;
a carrier in which a time interval of a synchronization signal is longest;
a carrier in which a time interval of a synchronization signal is a predetermined time interval;
a carrier whose SCS is largest;
a carrier whose SCS is smallest; and
a carrier whose SCS is a predetermined SCS.

In some possible embodiments, the selection priority is determined based on at least one of the following:
a selection priority relationship; and
a selection priority order, where
the selection priority relationship includes a mapping relationship between at least one selection priority and at least one carrier; and the selection priority order is an order of the at least one selection priority.

It should be noted that the selection priority may be a selection priority group. In other words, the selection priority may include a plurality of selection priorities, and the selection priority may include a plurality of carriers.

For example, the selection priority relationship may be a selection priority mapping table.

For example, the at least one selection priority may be one or more selection priority groups.

For example, the selection priority order may be obtained through sorting based on any order or specific order, for example, from high to low, from low to high, or a specific order.

For example, the selection priority order may be specified in a protocol.

It should be noted that the at least one carrier is at least one carrier included in the selection priority, or at least one carrier corresponding to the selection priority, or at least one carrier with the selection priority.

For example, the process of determining the second carrier by the terminal based on a selection priority order may include: the terminal sorts the plurality of first carriers based on the selection priority order, and determines at least one carrier with a highest selection priority from the plurality of first carriers as the second carrier.

In some possible embodiments, the determining the second carrier based on a selection priority includes at least one of the following:
determining that a carrier whose selection priority is highest is the second carrier;
determining that a carrier whose selection priority is higher than a first predetermined selection priority is the second carrier;
determining that a carrier whose selection priority is lowest is the second carrier;
determining that a carrier whose selection priority is lower than a second predetermined selection priority is the second carrier; and
determining that a carrier whose selection priority is a third selection priority is the second carrier.

For example, the method for determining the second carrier by the terminal (that is, the method for selecting the synchronization carrier by the terminal) includes at least one of the following:
(a1) determining the second carrier based on the selection priority order;
(a2) determining that a carrier whose selection priority is highest or higher than a first threshold is the second carrier;
(a3) determining that a carrier whose selection priority is lowest or lower than a first threshold is the second carrier;
(a4) determining that a carrier whose selection priority is a specific selection priority is the second carrier;
for example, the foregoing (a1) to (a4) may be obtained based on at least one of the following (1) to (6):
   (1) synchronization reference priority indication information and/or first indication information of at least some carriers in an aggregated carrier, multiple carriers, at least two carriers, set A, set B, or the first carrier set;
   (2) a synchronization reference order of at least some carriers in an aggregated carrier, multiple carriers, at least two carriers, set A, set B, or the first carrier set;
   (3) HARQ configurations of at least some carriers in an aggregated carrier, multiple carriers, at least two carriers, set A, set B, or the first carrier set;
   (4) PSFCH configurations of at least some carriers in an aggregated carrier, multiple carriers, at least two carriers, set A, set B, or the first carrier set;
   (5) SCS configurations of at least some carriers in an aggregated carrier, multiple carriers, at least two carriers, set A, set B, or the first carrier set; and
   (6) synchronization resources corresponding to at least some carriers in an aggregated carrier, multiple carriers, at least two carriers, set A, set B, or the first carrier set;
(a5) determining that a carrier whose second priority is highest is the second carrier;
(a6) determining that a carrier whose second priority is lowest is the second carrier;
(a7) determining that a carrier whose second priority is a specific priority is the second carrier;
(a8) determining that a carrier whose RSRP is highest is the second carrier;
(a9) determining that a carrier whose RSRP is lowest is the second carrier;
(a10) determining that a carrier whose RSRP is a specific value is the second carrier;
(a11) determining that a carrier whose searched time point is earliest is the second carrier;
(a12) determining that a carrier whose searched time point is latest is the second carrier;
(a13) determining that a carrier whose searched time point is a specific value is the second carrier;
(a14) determining that a carrier whose synchronization reference is of a specific type is the second carrier;
for example, the foregoing (a5) to (a14) may be obtained based on at least one of the following (1) to (3):
   (1) a synchronization reference order of at least part of at least some carriers in an aggregated carrier, multiple carriers, at least two carriers, set A, set B, or the first carrier set;
   (2) a synchronization reference order of at least part of at least some carriers in an aggregated carrier, multiple carriers, at least two carriers, set A, set B, or the first carrier set; and
   (3) synchronization reference priority indication information or first information of at least part of at least some carriers in an aggregated carrier, multiple carriers, at least two carriers, set A, set B, or the first carrier set;
(a15) determining that a carrier whose HARQ configuration is enabled is the second carrier;
(a16) determining that a carrier whose HARQ configuration is not enabled is the second carrier;
(a17) determining that a carrier whose period in a PSFCH configuration is longest is the second carrier;
(a18) determining that a carrier whose period in a PSFCH configuration is shortest is the second carrier;
(a19) determining that a carrier with a specific PSFCH period is the second carrier;

(a20) determining that a carrier including at least one resource pool with a PSFCH resource is the second carrier;
(a21) determining that a carrier including at least one resource pool without a PSFCH resource is the second carrier;
(a22) determining that a carrier including resource pools none of which has a PSFCH resource is the second carrier;
(a23) determining that a carrier including resource pools all of which have PSFCH resources is the second carrier;
(a24) determining that a carrier whose SCS is largest is the second carrier;
(a25) determining that a carrier whose SCS is smallest is the second carrier;
   (a26) determining that a carrier whose SCS is a specific value is the second carrier;
   for example, the foregoing (a15) to (a26) may be obtained based on the following:
      (1) HARQ/PSFCH/SCS configurations of at least some carriers in an aggregated carrier, multiple carriers, at least two carriers, set A, set B, or the first carrier set;
   (a27) determining that a carrier in which a period of a synchronization signal is longest is the second carrier;
   (a28) determining that a carrier in which a period of a synchronization signal is shortest is the second carrier;
   (a29) determining that a carrier in which a period of a synchronization signal is a specific value is the second carrier;
   (a30) determining that a carrier in which a quantity of synchronization slots in a period is largest is the second carrier;
   (a31) determining that a carrier in which a quantity of synchronization slots in a period is smallest is the second carrier;
   (a32) determining that a carrier in which a quantity of synchronization slots in a period is a specific value is the second carrier;

(a33) determining that a carrier in which a quantity of repetitions of an S-SSB is largest is the second carrier;
(a34) determining that a carrier in which a quantity of repetitions of an S-SSB is smallest is the second carrier;
(a35) determining that a carrier in which a quantity of repetitions of an S-SSB is a specific value is the second carrier;
   (a36) determining that a carrier in which a synchronization slot offset is largest is the second carrier;
   (a37) determining that a carrier in which a synchronization slot offset is smallest is the second carrier;
   (a38) determining that a carrier in which a synchronization slot offset is a specific value is the second carrier;

(a39) determining that a carrier in which a time interval of an S-SSB is longest is the second carrier; and
(a40) determining that a carrier in which a time interval of an S-SSB is a specific value is the second carrier.

For example, the foregoing (a27) to (a40) may be obtained based on the following:
(1) synchronization resources corresponding to (for example, configured or preconfigured for) at least some carriers in an aggregated carrier, multiple carriers, at least two carriers, set A, set B, or the first carrier set.

In some possible embodiments, the selection priority is determined based on at least one of the following:
a protocol specification;
a network configuration;
a preconfiguration;
a network indication;
synchronization reference priority indication information;
first indication information;
a synchronization reference order;
a synchronization reference type;
a synchronization parameter configuration mode;
a second priority;
a HARQ configuration;
a PSFCH configuration;
an SCS configuration;
a synchronization resource;
a carrier frequency; and
a carrier index.

It may be understood that a carrier included in the selection priority may be determined based on at least one of the foregoing items.

In some possible embodiments, the selection priority order is determined based on at least one of the following:
synchronization reference priority indication information;
first indication information;
a synchronization reference order;
a synchronization reference type;
a synchronization parameter configuration mode;
a second priority;
a HARQ configuration;
a PSFCH configuration;
an SCS configuration;
a synchronization resource;
a carrier frequency; and
a carrier index.

For example, the synchronization reference priority indication information may be sl-NbAsSync.

For example, the first indication information is used to indicate at least one of the following:
whether at least one specific synchronization reference needs to be monitored;
whether at least one specific synchronization reference needs to be skipped; and
whether to synchronize directly or indirectly to at least one specific synchronization reference.

For example, the synchronization reference order includes at least one of the following:
a priority order or priority group order corresponding to synchronization references;
a priority order of services;
a priority order of synchronization resources;
an order of signal strength (for example, an order of reference signal received power RSRP); and
an order of searched time points.

For example, the synchronization reference type includes at least one of the following: a gNB, an eNB, a GNSS, UE, and a UE internal clock.

For example, the synchronization parameter configuration mode includes at least one of the following: a network configuration and a preconfiguration.

For example, the second priority includes at least one of the following:
a priority or priority group (priority group) of a synchronization reference;
a priority of a service; and
a priority of a synchronization resource.

For example, the priority of the synchronization resource may be 1 to 8 or 0 to 7.

For example, the HARQ configuration is used to indicate whether HARQ is enabled.

For example, the PSFCH configuration includes at least one of the following: a period of a PSFCH, a time domain position of the PSFCH, a frequency domain position of the PSFCH, configuration information indicating whether a PSFCH resource is configured, and a minimum interval between data and a corresponding PSFCH for feeding back the data.

For example, the synchronization resource includes at least one of the following:
a period of a synchronization signal;
a quantity of synchronization slots in the period of the synchronization signal;
a quantity of repetitions of the synchronization signal;
a synchronization slot offset;
a time interval of the synchronization signal; and
an SCS, where
the SCS includes at least one of the following: an SCS of an S-SSB and an SCS of a carrier.

For example, determining the selection priority based on the synchronization reference type is described by using two examples:
Example 1: Determining, based on the synchronization reference type, a carrier included in the selection priority, or determining a mapping relationship between at least one selection priority and at least one carrier may include at least one of the following:
   determining that a carrier whose synchronization reference is the gNB/eNB is the carrier with the selection priority;
   determining that a carrier whose synchronization reference is UE synchronized directly to the gNB/eNB is the carrier with the selection priority;
   determining that a carrier whose synchronization reference is UE synchronized indirectly to the gNB/eNB is the carrier with the selection priority;
   determining that a carrier whose synchronization reference is the GNSS is the carrier with the selection priority;
   determining that a carrier whose synchronization reference is UE synchronized directly to the GNSS is the carrier with the selection priority;
   determining that a carrier whose synchronization reference is UE synchronized indirectly to the GNSS is the carrier with the selection priority; and
   determining that a carrier whose synchronization reference is remaining UEs is the carrier with the selection priority.
Example 2: Determining, based on the synchronization reference type, a carrier included in the selection priority, or determining a mapping relationship between at least one selection priority and at least one carrier may include at least one of the following:
   determining that a carrier whose synchronization reference is SyncRef UE (synchronization reference UE) and in which an SLSS ID of the SyncRef UE belongs to a set or part of a set of SLSS IDs defined within coverage and whose coverage indication parameter indicates true, is the carrier with the selection priority;
   determining that a carrier whose synchronization reference is SyncRef UE and in which an SLSS ID of the SyncRef UE belongs to a set or part of a set of SLSS IDs defined within coverage and whose coverage indication parameter indicates false, is the carrier with the selection priority;
   determining that a carrier whose synchronization reference is SyncRef UE and in which an SLSS ID of the SyncRef UE is 0 and whose coverage indication reference indicates true, or a carrier whose synchronization reference is SyncRef UE and in which an SLSS ID of the SyncRef UE is 0 and in which an SLSS is transmitted on a third set of synchronization resources, is the carrier with the selection priority;
   determining that a carrier whose synchronization reference is SyncRef UE and in which an SLSS ID of the SyncRef UE is 0 and in which an SLSS is not transmitted on a third set of synchronization resources and whose coverage indication parameter indicates false, is the carrier with the selection priority;
   determining that a carrier whose synchronization reference is SyncRef UE and in which an SLSS ID of the SyncRef UE is 337 and whose coverage indication parameter indicates false, is the carrier with the selection priority; and
   determining that a carrier whose synchronization reference is other SyncRef UEs is the carrier with the selection priority.
Example 3: The selection priority may be determined based on at least one of the following:
   (1) synchronization reference priority indication information of at least some carriers in the plurality of carriers;
   (2) first indication information of at least some carriers in the plurality of carriers;
   (3) synchronization reference orders of at least some carriers in the plurality of carriers;
   (4) HARQ configurations of at least some carriers in the plurality of carriers;
   (5) PSFCH configurations of at least some carriers in the plurality of carriers;
   (6) SCS configurations of at least some carriers in the plurality of carriers;
   (7) PSFCH configurations of at least some carriers in the plurality of carriers;
   (8) SCS configurations of at least some carriers in the plurality of carriers;
   (9) synchronization resources included (for example, configured or preconfigured) in at least some carriers in the plurality of carriers;
   (10) synchronization reference priority types of at least some carriers in the plurality of carriers;
   (11) synchronization reference types of at least some carriers in the plurality of carriers;
   (12) second priorities of at least some carriers in the plurality of carriers; and
   (13) synchronization parameter configuration modes of at least some carriers in the plurality of carriers.

For example, in a case that the selection priority is determined based on the second priority, a carrier whose synchronization reference priority is a value (or some values) is determined as the carrier with the selection priority; and/or a carrier whose service priority is a value (or some values) is determined as the carrier with the selection priority; and/or a carrier whose synchronization resource priority is a value (or some values) is determined as the carrier with the selection priority.

Further, the selection priority may be determined based on synchronization reference orders of at least some carriers in the plurality of carriers (including at least one of the following: a plurality of carriers in an aggregated carrier, multiple carriers, at least part of at least two carriers, at least some carriers in set A, at least some carriers in set B, and at least some carriers in the first carrier set).

For example, in a case that the selection priority is determined based on the HARQ/PSFCH/SCS configuration, a carrier whose HARQ/PSFCH/SCS configuration is a parameter (or parameters) may be determined as the carrier with the selection priority.

For example, in a case that the selection priority is determined based on the carrier frequency, a carrier whose carrier frequency is a value (or some values) is determined as the carrier with the selection priority.

For example, in a case that the selection priority is determined based on the carrier index, a carrier whose carrier index is a value (or some values) is determined as the carrier with the selection priority.

For example, in a case that the selection priority is determined based on the synchronization resource, a carrier whose synchronization resource is a value (or some values) is determined as the carrier with the selection priority. For example, a carrier in which a period of a synchronization signal is a value (or some values), a carrier in which a quantity of synchronization slots in a period is a value (or some values), and/or a carrier in which a quantity of repetitions of an S-SSB is a value (or some values), and/or a carrier whose synchronization slot offset is a value (or some values), and/or a carrier in which a time interval of an S-SSB is a value (or some values), and/or a carrier in which an SCS of an S-SSB is a value (or some values), are/is determined as the carrier with the selection priority.

Further, the selection priority may be determined based on synchronization resources of at least some carriers in the plurality of carriers (including at least one of the following: a plurality of carriers in an aggregated carrier, multiple carriers, at least part of at least two carriers, at least some carriers in set A, at least some carriers in set B, and at least some carriers in the first carrier set).

For example, in a case that the selection priority includes a carrier whose synchronization reference is of some synchronization reference types, the at least one carrier includes at least one of the following:
a carrier whose synchronization reference is the gNB/eNB;
a carrier whose synchronization reference is UE synchronized directly to the gNB/eNB;
a carrier whose synchronization reference is UE synchronized indirectly to the gNB/eNB;
a carrier whose synchronization reference is the GNSS;
a carrier whose synchronization reference is UE synchronized directly to the GNSS;
a carrier whose synchronization reference is UE synchronized indirectly to the GNSS; and
a carrier whose synchronization reference is remaining UEs.

For example, in a case that at least one carrier is determined based on the synchronization reference type, the at least one carrier may include at least one of the following:
a carrier whose synchronization reference is of a first synchronization reference type and in which a sidelink synchronization signal SLSS identity ID of the first synchronization reference type belongs to a first SLSS ID set and whose coverage indication parameter indicates third information;
a carrier whose synchronization reference is of a first synchronization reference type and in which an SLSS ID of the first synchronization reference type belongs to a first SLSS ID set and whose coverage indication parameter indicates fourth information;
a carrier whose synchronization reference is of a first synchronization reference type and in which an SLSS ID of the first synchronization reference type is a first SLSS ID and whose coverage indication parameter indicates third information;
a carrier whose synchronization reference is of a first synchronization reference type and in which an SLSS ID of the first synchronization reference type is a first SLSS ID and in which an SLSS of the synchronization reference is transmitted on a first synchronization resource;
a carrier whose synchronization reference is of a first synchronization reference type and in which an SLSS ID of the first synchronization reference type is a first SLSS ID and in which an SLSS of the synchronization reference is not transmitted on a first synchronization resource and whose coverage indication parameter indicates fourth information; and
a carrier whose synchronization reference is of a first synchronization reference type and in which an SLSS ID of the first synchronization reference type is a second SLSS ID and whose coverage indication parameter indicates fourth information.

For example, the first synchronization reference type includes any one of the following: UE, a gNB, an eNB, a GNSS, and a UE internal clock. For example, the first SLSS ID set includes at least part of SLSS ID sets defined within coverage of a carrier. For example, the first synchronization resource includes a third set of synchronization resources specified in a protocol. For example, the third information and the fourth information may be status indication information, for example, indicating true (or true) or indicating false (or false).

For example, the UE may include at least one of the following: UE synchronized directly to the GNSS, UE synchronized indirectly to the GNSS, UE synchronized directly to the gNB/eNB, UE synchronized indirectly to the gNB/eNB, and remaining Sync UEs.

For example, using the synchronization reference type as an example, the at least one carrier may include at least one of the following:
a carrier whose synchronization reference is the gNB/eNB;
a carrier whose synchronization reference is the GNSS;
a carrier whose synchronization reference is SyncRef UE and in which an SLSS ID of the SyncRef UE belongs to a set or part of a set of SLSS IDs defined within coverage and whose coverage indication parameter indicates true;
a carrier whose synchronization reference is SyncRef UE and in which an SLSS ID of the SyncRef UE belongs to a set or part of a set of SLSS IDs defined within coverage and whose coverage indication parameter indicates false;
a carrier whose synchronization reference is SyncRef UE and in which an SLSS ID of the SyncRef UE is 0 and whose coverage indication reference indicates true, or a carrier whose synchronization reference is SyncRef UE and in which an SLSS ID of the SyncRef UE is 0 and in which an SLSS is transmitted on a third set of synchronization resources;
a carrier whose synchronization reference is SyncRef UE and in which an SLSS ID of the SyncRef UE is 0 and in which an SLSS is not transmitted on a third set of synchronization resources and whose coverage indication parameter indicates false; and
a carrier whose synchronization reference is SyncRef UE and in which an SLSS ID of the SyncRef UE is 337 and whose coverage indication parameter indicates false.

For example, in a case that at least one carrier is determined based on the second priority, the at least one carrier may be a carrier whose priority is a value (or some values), such as a carrier whose synchronization reference is a value (or some values), a carrier whose service priority is a value (or some values), or a carrier whose synchronization resource priority is a value (or some values).

For example, in a case that at least one carrier is determined based on the carrier frequency, the at least one carrier may be a carrier whose carrier frequency is a value (or some values).

For example, in a case that at least one carrier is determined based on the carrier index, the at least one carrier may be a carrier whose carrier index is a value (or some values).

For example, in a case that at least one carrier is determined based on the synchronization resource, the at least one carrier may be a carrier whose synchronization resource is a value (or some values), such as a carrier in which a period of a synchronization signal is a value (or some values), a carrier in which a quantity of synchronization slots in a period is a value (or some values), a carrier in which a quantity of repetitions of an S-SSB is a value (or some values), a carrier whose synchronization slot offset is a value (or some values), a carrier in which a time interval of an S-SSB is a value (or some values), or a carrier in which an SCS of an S-SSB is a value (or some values).

In some possible embodiments, the selection priority order is determined based on at least one of the following:
determined based on a synchronization reference order of a carrier;
determined based on a synchronization reference order corresponding to an overlapping part in a case that a synchronization reference order of a carrier includes the overlapping part;
determined based on a synchronization reference order corresponding to a non-overlapping part other than an overlapping part in a case that a synchronization reference order of a carrier includes the overlapping part; and
determined based on an arrangement order of carriers.

In some possible embodiments, the selection priority order meets at least one of the following:
a selection priority of a carrier with a high synchronization reference priority is higher than a selection priority of a carrier with a low synchronization reference priority or lower than a selection priority of a carrier with a low synchronization reference priority;
a synchronization reference priority order of a carrier includes an overlapping part, and a selection priority of a carrier with a high synchronization reference priority in the overlapping part is higher than a selection priority of a carrier with a low synchronization reference priority in the overlapping part, or lower than a selection priority of a carrier with a low synchronization reference priority in the overlapping part; and
a synchronization reference priority order of a carrier includes an overlapping part, and a selection priority of a carrier with a high synchronization reference priority in a non-overlapping part other than the overlapping part is higher than a selection priority of a carrier with a low synchronization reference priority in the non-overlapping part, or lower than a selection priority of a carrier with a low synchronization reference priority in the non-overlapping part.

For example, the synchronization reference priority order may be a priority order of synchronization reference priorities.

In some possible embodiments, the selection priority order meets at least one of the following:
a selection priority of a carrier with a high synchronization reference order is higher than a selection priority of a carrier with a low synchronization reference order or lower than a selection priority of a carrier with a low synchronization reference order;
a synchronization reference order of a carrier includes an overlapping part, and a selection priority of a carrier with a high synchronization reference order in the overlapping part is higher than a selection priority of a carrier with a low synchronization reference order in the overlapping part, or lower than a selection priority of a carrier with a low synchronization reference order in the overlapping part; and
a synchronization reference order of a carrier includes an overlapping part, and a selection priority of a carrier with a high synchronization reference order in a non-overlapping part other than the overlapping part is higher than a selection priority of a carrier with a low synchronization reference order in the non-overlapping part, or lower than a selection priority of a carrier with a low synchronization reference order in the non-overlapping part.

In some possible embodiments, the overlapping part of the synchronization reference priority order is determined based on at least one of the following:
synchronization reference priority indication information;
first indication information;
a protocol predefinition;
a network configuration;
a network indication; and
a preconfiguration.

The first indication information is used to indicate at least one of the following:
whether at least one specific synchronization reference needs to be monitored;
whether at least one specific synchronization reference needs to be skipped; and
whether to synchronize directly or indirectly to at least one specific synchronization reference.

For example, in a case that synchronization reference priority indication information and/or first indication information of at least some carriers in a plurality of carriers are/is different, synchronization reference priority orders corresponding to at least some carriers in the plurality of carriers are different.

It should be noted that for different synchronization reference priorities corresponding to different priority indication information, reference may be made to the foregoing description. Details are not described herein again.

In some possible embodiments, the selection priority order may be obtained by sorting a plurality of selection priorities in any order or specific order.

The following uses several examples to describe the process of determining the selection priority.

### First possible example:

A solution to determining a selection priority in scenarios of different synchronization reference orders is as follows:
For example, if the synchronization reference orders of the plurality of carriers are different, the selection priority may be determined by at least one of the following:
(b1) A selection priority of a carrier with a high synchronization reference order is higher or lower than a selection priority of a carrier with a low synchronization reference order.
(b2) If the synchronization reference orders of the plurality of carriers have an overlapping part, a selection priority of a carrier with a high synchronization reference order in the overlapping part is higher or lower than a selection priority of a carrier with a low synchronization reference order.

Example 4: (Definition of the overlapping part) The overlapping part of the synchronization reference order is determined based on a synchronization reference order of at least one carrier.

For example, using carrier 1 and carrier 2 as an example, synchronization reference priority orders corresponding to carrier 1 and carrier 2 are different.

For example, a synchronization reference priority order (synchronization reference priority a1 to synchronization reference priority a6) of synchronization references of carrier 1 is as follows:
synchronization reference priority a1: UE synchronized directly to the GNSS;
synchronization reference priority a2: UE synchronized indirectly to the GNSS;
synchronization reference priority a3: gNB/eNB;
synchronization reference priority a4: UE synchronized directly to the gNB/eNB;
synchronization reference priority a5: UE synchronized indirectly to the gNB/eNB; and
synchronization reference priority a6: remaining UEs.

A synchronization reference priority order (synchronization reference priority b1 to synchronization reference priority b3) of synchronization references of carrier 2 is as follows:
synchronization reference priority b1: UE synchronized directly to the GNSS;
synchronization reference priority b2: UE synchronized indirectly to the GNSS; and
synchronization reference priority b3: remaining UEs.

It should be noted that the synchronization reference priorities of carrier 1 are: synchronization reference priority a1, synchronization reference priority a2, synchronization reference priority a3, synchronization reference priority a4, synchronization reference priority a5, and synchronization reference priority a6 sequentially from high to low; and the synchronization reference priorities of carrier 2 are: synchronization reference priority b1, synchronization reference priority b2, and synchronization reference priority b3 sequentially from high to low.

It should be noted that the overlapping part of the synchronization reference priorities of carrier 1 and carrier 2 includes three synchronization reference priorities: UE synchronized directly to the GNSS, UE synchronized indirectly to the GNSS, and remaining UEs.

It should be noted that "a1" to "a6" in the synchronization reference priorities a1 to a6 are used to distinguish different synchronization reference priorities, where the numbers "1" to "6" in the synchronization reference priorities a1 to a6 may be used to represent magnitudes of the synchronization reference priorities, that is, the smaller the number, the higher the synchronization reference selection priority. The synchronization reference priority b1 to synchronization reference priority b3 are similar to the foregoing.

Example 5: The overlapping part of the synchronization reference order is predefined in a protocol, configured by a network, indicated by a network, or preconfigured.

(b3) If a synchronization reference order has an overlapping part, a selection priority of a carrier with a high synchronization reference order in a non-overlapping part is higher or lower than a selection priority of a carrier with a low synchronization reference order.

Example 6: (Definition of the non-overlapping part) The non-overlapping part of the synchronization reference order is determined based on the synchronization reference orders of the plurality of carriers.

For example, using carrier 1 and carrier 2 as an example, synchronization reference priority orders corresponding to carrier 1 and carrier 2 are different.

It can be learned from the foregoing synchronization reference priorities of carrier 1 and carrier 2 that the non-overlapping part of carrier 1 and carrier 2 includes: and the overlapping part includes: the gNB/eNB, UE synchronized directly to the gNB/eNB, and UE synchronized indirectly to the gNB/eNB.

Example 7: The non-overlapping part of the synchronization reference order may be predefined in a protocol, configured by a network, indicated by a network, or preconfigured.

(b4) Selection priorities may be sorted in a specific synchronization reference order.

(b5) A selection priority of a carrier whose synchronization reference order is a specific order is higher or lower than a selection priority of a carrier whose synchronization reference order is another order.

It should be noted that the foregoing b2 and b3 can ensure that a carrier selection does not conflict with the configuration, where b2 corresponds to a method for determining a slection priority of a carrier in a case that there are synchronization reference priorities corresponding to carriers within the overlapping part and b3 corresponds to a method for determining a selection priority of a carrier in a case that there are synchronization reference priorities correspong to all cirriers outside the overlapping part.

### Second possible example:

A solution to determining a selection priority in a scenario of same indication information (for example, synchronization reference priority indication information or first indication information) is as follows:
For example, if indication information of at least some carriers in the plurality of carriers is the same, the selection priority order is: a selection priority of a carrier with a high synchronization reference priority is higher or lower than a selection priority of a carrier with a low synchronization reference priority.

Example 8: sl-NbAsSync of carrier 3 and carrier 4 is true, and it is determined that a synchronization reference priority order (synchronization reference priority c1 to synchronization reference priority c6) of synchronization references of carrier 3 and carrier 4 is as follows:
synchronization reference priority c1: UE synchronized directly to the GNSS;
synchronization reference priority c2: UE synchronized indirectly to the GNSS;
synchronization reference priority c3: gNB/eNB;
synchronization reference priority c4: UE synchronized directly to the gNB/eNB;
synchronization reference priority c5: UE synchronized indirectly to the gNB/eNB; and
synchronization reference priority c6: remaining UEs.

Correspondingly, the selection priority order may include order 1, and order 1 (selection priority a1 to selection priority a6) is as follows:
selection priority a1: a carrier whose synchronization reference is UE synchronized directly to the GNSS;
selection priority a2: a carrier whose synchronization reference is UE synchronized indirectly to the GNSS;
selection priority a3: a carrier whose synchronization reference is the gNB/eNB;
selection priority a4: a carrier whose synchronization reference is UE synchronized directly to the gNB/eNB;
selection priority a5: a carrier whose synchronization reference is UE synchronized indirectly to the gNB/eNB; and
selection priority a6: a carrier whose synchronization reference is remaining UEs.

It should be noted that the synchronization reference priorities of carrier 3 and carrier 4 are: synchronization reference priority c1, synchronization reference priority c2, synchronization reference priority c3, synchronization reference priority c4, synchronization reference priority c5, and synchronization reference priority c6 sequentially from high to low.

It should be noted that "c1" to "c6" in the synchronization reference priorities c1 to c6 are used to distinguish different synchronization reference priorities, where the numbers "1" to "6" in the synchronization reference priorities c1 to c6 may be used to represent magnitudes of the synchronization reference priorities, that is, the smaller the number, the higher the synchronization reference selection priority. The selection priority a1 to the selection priority a6 are similar to the foregoing.

Example 9: sl-NbAsSync of carrier 5 and carrier 6 is true, and it is determined that a synchronization reference priority order (synchronization reference priority cc1 to synchronization reference priority cc7) of synchronization references of carrier 5 and carrier 6 is as follows:
synchronization reference priority cc1: an SLSS ID of UE is 0, and a coverage indication reference indicates true; or an SLSS ID of UE is 0, and an SLSS is transmitted on a third set of synchronization resources;
synchronization reference priority cc2: an SLSS ID of UE is 0, and an SLSS is not transmitted on a third set of synchronization resources, and a coverage indication parameter indicates false;
synchronization reference priority cc3: an SLSS ID of UE is 337, and a coverage indication parameter indicates false;
synchronization reference priority cc4: gNB/eNB;
synchronization reference priority cc5: an SLSS ID of UE belongs to a set or part of a set of SLSS IDs defined within coverage, and a coverage indication parameter indicates true;
synchronization reference priority cc6: an SLSS ID of UE belongs to a set or part of a set of SLSS IDs defined within coverage, and a coverage indication parameter indicates false; and
synchronization reference priority cc7: remaining UEs.

Correspondingly, the selection priority order may include order 2, and order 2 (selection priority aa1 to selection priority aa7) is as follows:
selection priority aa1: a carrier whose synchronization reference is SyncRef UE and in which an SLSS ID of the SyncRef UE is 0 and whose coverage indication reference indicates true, or a carrier whose synchronization reference is SyncRef UE and in which an SLSS ID of the SyncRef UE is 0 and in which an SLSS is transmitted on a third set of synchronization resources;
selection priority aa2: a carrier whose synchronization reference is SyncRef UE and in which an SLSS ID of the SyncRef UE is 0 and in which an SLSS is not transmitted on a third set of synchronization resources and whose coverage indication parameter indicates false;
selection priority aa3: a carrier whose synchronization reference is SyncRef UE and in which an SLSS ID of the SyncRef UE is 337 and whose coverage indication parameter indicates false;
selection priority aa4: a carrier whose synchronization reference is the gNB/eNB;
selection priority aa5: a carrier whose synchronization reference is SyncRef UE and in which an SLSS ID of the SyncRef UE belongs to a set or part of a set of SLSS IDs defined within coverage and whose coverage indication parameter indicates true;
selection priority aa6: a carrier whose synchronization reference is SyncRef UE and in which an SLSS ID of the SyncRef UE belongs to a set or part of a set of SLSS IDs defined within coverage and whose coverage indication parameter indicates false; and
selection priority aa7: a carrier whose synchronization reference is other SyncRef UEs.

It should be noted that the synchronization reference priorities of carrier 5 and carrier 6 are: synchronization reference priority cc1, synchronization reference priority cc2/synchronization reference priority cc3, synchronization reference priority cc4, synchronization reference priority cc5, synchronization reference priority cc6, and synchronization reference priority cc7 sequentially from high to low.

It should be noted that the priorities corresponding to order 2 are: selection priority aa1, selection priority aa2/selection priority aa3, selection priority aa4, selection priority aa5, selection priority aa6, and selection priority aa7 sequentially from high to low.

Priorities of any several of the selection priorities may be the same. For example, priorities (priority orders) of cc2 and cc3 may be the same, and priorities (priority orders) of aa2 and aa3 may be the same.

It should be noted that "cc1" to "cc7" in the synchronization reference priorities cc1 to cc7 are used to distinguish different synchronization reference priorities, and the numbers "1" to "7" in the synchronization reference priorities cc1 to cc7 may be used to represent magnitudes of the synchronization reference priorities, that is, the smaller the number, the higher the synchronization reference selection priority. The selection priority aa1 to the selection priority aa7 are similar to the foregoing.

### Third possible example:

A solution to determining a selection priority in a scenario of different indication information (for example, synchronization reference priority indication information or first indication information) is as follows:

For example, if indication information of the plurality of carriers is different, the selection priority may be determined by at least one of the following:
(c1) A selection priority of a carrier with a high synchronization reference priority is higher or lower than a selection priority of a carrier with a low synchronization reference priority.

(c2) If a synchronization reference priority order has an overlapping part, a selection priority of a carrier with a high synchronization reference priority in the overlapping part is higher or lower than a selection priority of a carrier with a low synchronization reference priority.

Example 10: (Definition of the overlapping part) In a case that the selection priority order is determined based on a priority order of synchronization reference priorities in the overlapping part, the selection priority order is described by using the following examples:
For example, if indication information of at least two carriers is different (for example, sl-NbAsSync is true or false), corresponding synchronization reference priority orders are different.

### Example 1:

sl-NbAsSync of carrier 7 is true, and it is determined that a synchronization reference priority order (synchronization reference priority d1 to synchronization reference priority d6) of synchronization references of carrier 7 is as follows:
synchronization reference priority d1: UE synchronized directly to the GNSS;
synchronization reference priority d2: UE synchronized indirectly to the GNSS;
synchronization reference priority d3: gNB/eNB;
synchronization reference priority d4: UE synchronized directly to the gNB/eNB;
synchronization reference priority d5: UE synchronized indirectly to the gNB/eNB; and
synchronization reference priority d6: remaining UEs.
sl-NbAsSync of carrier 8 is false, and it is determined that a synchronization reference priority order (synchronization reference priority e1 to synchronization reference priority e3) of synchronization references of carrier 8 is as follows:
synchronization reference priority e1: UE synchronized directly to the GNSS;
synchronization reference priority e2: UE synchronized indirectly to the GNSS; and
synchronization reference priority e3: remaining UEs.

It should be noted that the synchronization reference priorities of carrier 7 are: synchronization reference priority d1, synchronization reference priority d2, synchronization reference priority d3, synchronization reference priority d4, synchronization reference priority d5, and synchronization reference priority d6 sequentially from high to low; and the synchronization reference priorities of carrier 8 are: synchronization reference priority e1, synchronization reference priority e2, and synchronization reference priority e3 sequentially from high to low.

It should be noted that "d1" to "d6" in the synchronization reference priorities d1 to d6 are used to distinguish different synchronization reference priorities, where the numbers "1" to "6" in the synchronization reference priorities d1 to d6 may be used to represent magnitudes of the synchronization reference priorities, that is, the smaller the number, the higher the synchronization reference selection priority. The synchronization reference priorities e1 to e3 are similar to the foregoing.

Correspondingly, the selection priority order may include order 3, and order 3 (selection priority b1 to selection priority b3) is as follows:
order 3:
selection priority b1: a carrier whose synchronization reference is UE synchronized directly to the GNSS;
selection priority b2: a carrier whose synchronization reference is UE synchronized indirectly to the GNSS; and
selection priority b3: a carrier whose synchronization reference is the remaining UEs having the lowest priority.

It should be noted that, in order 3, the selection priorities are selection priority b1, selection priority b2, and selection priority b3 sequentially from high to low.

### Example 2:

sl-NbAsSync of carrier 9 is true, and it is determined that a synchronization reference priority order (synchronization reference priority dd1 to synchronization reference priority dd7) of synchronization references of carrier 9 is as follows:
synchronization reference priority dd1: an SLSS ID of UE is 0, and a coverage indication reference indicates true; or an SLSS ID of UE is 0, and an SLSS is transmitted on a third set of synchronization resources;
synchronization reference priority dd2: an SLSS ID of UE is 0, and an SLSS is not transmitted on a third set of synchronization resources, and a coverage indication parameter indicates false;
synchronization reference priority dd3: an SLSS ID of UE is 337, and a coverage indication parameter indicates false;
synchronization reference priority dd4: gNB/eNB;
synchronization reference priority dd5: an SLSS ID of UE belongs to a set or part of a set of SLSS IDs defined within coverage, and a coverage indication parameter indicates true;
synchronization reference priority dd6: an SLSS ID of UE belongs to a set or part of a set of SLSS IDs defined within coverage, and a coverage indication parameter indicates false; and
synchronization reference priority dd7: remaining UEs.

Priorities of any several of the selection priorities may be the same. For example, the priorities (priority orders) of dd2 and dd3 may be the same.

sl-NbAsSync of carrier 10 is false, and it is determined that a synchronization reference priority order (synchronization reference priority ee1 to synchronization reference priority ee4) of synchronization references of carrier 10 is as follows:
synchronization reference priority ee1: an SLSS ID of UE is 0, and a coverage indication reference indicates true; or an SLSS ID of UE is 0, and an SLSS is transmitted on a third set of synchronization resources;
synchronization reference priority ee2: an SLSS ID of UE is 0, and an SLSS is not transmitted on a third set of synchronization resources, and a coverage indication parameter indicates false;
synchronization reference priority ee3: an SLSS ID of UE is 337, and a coverage indication parameter indicates false; and
synchronization reference priority ee4: remaining UEs.

Priorities of any several of the synchronization reference priorities may be the same. For example, the priorities (priority orders) of ee2 and ee3 may be the same.

It should be noted that the synchronization reference priorities of carrier 9 are: synchronization reference priority dd1, synchronization reference priority dd2/synchronization reference priority dd3, synchronization reference priority dd4, synchronization reference priority dd5, synchronization reference priority dd6, and synchronization reference priority dd7 sequentially from high to low; and the synchronization reference priorities of carrier 10 are: synchronization reference priority ee1, synchronization reference priority ee2/synchronization reference priority ee3, and synchronization reference priority ee4 sequentially from high to low.

It should be noted that "dd1" to "dd7" in the synchronization reference priorities dd1 to dd7 are used to distinguish different synchronization reference priorities, where the numbers "1" to "7" in the synchronization reference priorities dd1 to dd7 may be used to represent magnitudes of the synchronization reference priorities, that is, the smaller the number, the higher the synchronization reference selection priority. The synchronization reference priorities ee1 to ee4 are similar to the foregoing.

Correspondingly, the selection priority order may include order 4, and order 4 (selection priority bb1 to selection priority bb4) is as follows:
order 4:
selection priority bb1: a synchronization reference is SyncRef UE and an SLSS ID of the SyncRef UE is 0 and a coverage indication reference indicates true, or a synchronization reference is SyncRef UE and an SLSS ID of the SyncRef UE is 0 and an SLSS;
selection priority bb2: a carrier whose synchronization reference is SyncRef UE and in which an SLSS ID of the SyncRef UE is 0 and in which an SLSS is not transmitted on a third set of synchronization resources and whose coverage indication parameter indicates false;
selection priority bb3: a carrier whose synchronization reference is SyncRef UE and in which an SLSS ID of the SyncRef UE is 337 and whose coverage indication parameter indicates false; and
selection priority bb4: a carrier whose synchronization reference is other SyncRef UEs.

Priorities of any several of the selection priorities may be the same. For example, the priorities (priority orders) of bb2 and bb3 may be the same.

It should be noted that, in order 4, the selection priorities are selection priority bb1, selection priority bb2/selection priority bb3, and selection priority bb4 sequentially from high to low.

Example 11: The overlapping part of the synchronization reference order is predefined in a protocol, configured by a network, indicated by a network, or preconfigured.

(c3) If a synchronization reference priority order has an overlapping part, a selection priority of a carrier with a high synchronization reference priority in a non-overlapping part is higher or lower than a selection priority of a carrier with a low synchronization reference priority.

Example 12: In a case that the selection priority order is determined based on a priority order of synchronization reference priorities in the non-overlapping part (other than the overlapping part), the selection priority order is described by using the following examples:
For example, if indication information of at least two carriers is different (for example, sl-NbAsSync is true or false), corresponding synchronization reference priority orders are different.

Example 13: With reference to the foregoing example 1, the non-overlapping part of the synchronization reference priorities of carrier 7 and carrier 8 includes: three synchronization reference priorities: the gNB/eNB, UE synchronized directly to the gNB/eNB, and UE synchronized indirectly to the gNB/eNB. In this case, the selection priority order may include the following order 5:
order 5:
selection priority d1: a carrier whose synchronization reference is the gNB/eNB;
selection priority d2: a carrier whose synchronization reference is UE synchronized directly to the gNB/eNB; and
selection priority d3: a carrier whose synchronization reference is UE synchronized indirectly to the gNB/eNB.

It should be noted that, in order 4, the selection priorities are selection priority d1, selection priority d2, and selection priority d3 sequentially from high to low.

It should be noted that "d1" to "d3" in the selection priorities d1 to d3 are used to distinguish different selection priorities, where the numbers "1" to "3" in the selection priorities d1 to d3 may be used to represent magnitudes of the selection priorities, that is, the smaller the number, the higher the selection priority.

Example 14: With reference to the foregoing example 2, the non-overlapping part of the synchronization reference priorities of carrier 9 and carrier 10 includes: three synchronization reference priorities: the gNB/eNB; UE whose SLSS ID belongs to a set or part of a set of SLSS IDs defined within coverage, and whose coverage indication parameter indicates true; and UE whose SLSS ID belongs to a set or part of a set of SLSS IDs defined within coverage, and whose coverage indication parameter indicates false. In this case, the selection priority order may include the following order 6:
order 6:
selection priority dd1: a carrier whose synchronization reference is the gNB/eNB;
selection priority dd2: a carrier whose synchronization reference is SyncRef UE and in which an SLSS ID of the SyncRef UE belongs to a set or part of a set of SLSS IDs defined within coverage and whose coverage indication parameter indicates true; and
selection priority dd3: a carrier whose synchronization reference is SyncRef UE and in which an SLSS ID of the SyncRef UE belongs to a set or part of a set of SLSS IDs defined within coverage and whose coverage indication parameter indicates false.

Priorities of any several of the selection priorities may be the same. For example, the priorities (priority orders) of dd2 and dd3 may be the same.

It should be noted that, in order 5, the selection priorities are selection priority dd1, selection priority dd2/selection priority dd3, and selection priority dd4 sequentially from high to low.

It should be noted that "dd1" to "dd3" in the selection priorities dd1 to dd4 are used to distinguish different selection priorities, where the numbers "1" to "4" in the selection priorities dd1 to dd4 may be used to represent magnitudes of the selection priorities, that is, the smaller the number, the higher the selection priority.

It should be noted that the synchronization reference priority order in this embodiment of this application may be a synchronization reference priority order; and the selection priority order may be a selection priority order.
(c4) Selection priorities are sorted in a specific synchronization reference priority order.
(c5) A selection priority of a carrier whose synchronization reference order is a specific order is higher or lower than a selection priority of a carrier whose synchronization reference order is another order.

It should be noted that the selection priority orders corresponding to the foregoing selection priority orders 1, 2, 3, 4, 5, and 6 are examples of possible selection priority orders provided in this application, and do not constitute a limitation on the selection priority orders. It may also be determined, based on an actual situation, that the foregoing selection priority orders are other orders. This is not limited in this embodiment of this application.

In the carrier determining method provided in this embodiment of this application, a new synchronization carrier selection priority (that is, the selection priority) is designed based on different synchronization parameters, so that the synchronization reference obtained based on this synchronization carrier does not conflict with synchronization references that can be obtained by other aggregated carriers based on their configurations.

In some possible embodiments, the selection priority is determined based on at least one of the following (d1 to d4):
(d1) A selection priority of a carrier with a first synchronization reference is higher or lower than a selection priority of a carrier with a second synchronization reference.

For example, an order of the first synchronization reference is higher than an order of the second synchronization reference, and/or the first synchronization reference is a predetermined synchronization reference (such as a specific synchronization reference).

(d2) A selection priority of a carrier with a first HARQ configuration is higher or lower than a selection priority of a carrier with another HARQ configuration different from the first HARQ configuration.

For example, the first HARQ configuration is a predetermined HARQ configuration (such as a specific HARQ configuration).

(d3) A selection priority of a carrier with a first PSFCH configuration is higher or lower than a selection priority of a carrier with a second PSFCH configuration.

For example, the first PSFCH configuration and the second PSFCH configuration meet at least one of the following:
a period in the first PSFCH configuration is longer than a period in the second PSFCH configuration;
a period in the first PSFCH configuration is shorter than a period in the second PSFCH configuration;
the first PSFCH configuration is a predetermined PSFCH configuration (such as a specific PSFCH configuration); and
the carrier with the first PSFCH configuration is a carrier with a PSFCH resource, and the carrier with the second PSFCH configuration is a carrier without a PSFCH resource; or the carrier with the first PSFCH configuration is a carrier without a PSFCH resource, and the carrier with the second PSFCH configuration is a carrier with a PSFCH resource.

(d4) A selection priority of a carrier with a first SCS is higher or lower than a selection priority of a carrier with a second SCS.

For example, the first SCS is greater than the second SCS, and/or the first SCS is a predetermined SCS (such as a specific SCS).

In some possible embodiments, the selection priority is determined based on at least one of the following (e1 to e5):
e1: A selection priority of a carrier with a first synchronization signal is higher or lower than a selection priority of a carrier with a second synchronization signal.

For example, a period of the first synchronization signal is longer than a period of the second synchronization signal, and/or the period of the first synchronization signal is a third predetermined period (such as a specific period).

e2: A selection priority of a carrier in which a quantity of synchronization slots in a period is a first value is higher or lower than a selection priority of a carrier in which a quantity of synchronization slots in a period is a second value.

For example, the first value is greater than the second value, and/or the first value is a first predetermined value (such as a quantity of synchronization slots in a specific period).

e3: A selection priority of a carrier in which a quantity of repetitions of a synchronization signal is a third value is higher or lower than a selection priority of a carrier in which a quantity of repetitions of a synchronization signal is a fourth value.

For example, the third value is greater than the fourth value, and/or the third value is a second predetermined value (such as a quantity of specific repetitions of a synchronization signal).

e4: A selection priority of a carrier with a first synchronization slot offset is higher or lower than a selection priority of a carrier with a second synchronization slot offset.

For example, the first synchronization slot offset is greater than the second synchronization slot offset, and/or the first synchronization slot offset is a predetermined synchronization slot offset (such as a specific synchronization slot offset).

e5: A selection priority of a carrier with a first time interval is higher or lower than a selection priority of a carrier with a second time interval.

For example, the first time interval is longer than the second time interval, and/or the first time interval is a predetermined time interval (such as a specific time interval).

The following uses several examples to describe conditions to be met by the selection priority.

### First possible example:

For example, if synchronization reference orders of at least some carriers in the plurality of carriers are the same, the selection priority is determined based on the following rule (in other words, the selection priority needs to meet the following content): A selection priority of a carrier with a high synchronization reference order is higher or lower than a selection priority of a carrier with a low synchronization reference order.

For example, a selection priority of a carrier with a second high priority is higher or lower than a selection priority of a carrier with a second low priority.

For example, a selection priority of a carrier with high RSRP is higher or lower than a selection priority of a carrier with low RSRP.

For example, a selection priority of a carrier with an early searched time point is higher or lower than a selection priority of a carrier with a late searched time point.

### Second possible example:

For example, if HARQ configurations of at least some carriers in the plurality of carriers are the same, the selection priority is determined based on the following rule (in other words, the selection priority needs to meet the following content): A selection priority of a carrier whose HARQ configuration is a specific configuration is higher or lower than a selection priority of a carrier whose HARQ configuration is another configuration.

### Third possible example:

For example, if PSFCH configurations of at least some carriers in the plurality of carriers are different, the selection priority is determined based on at least one of the following (in other words, the selection priority needs to meet at least one of the following):
(1) A selection priority of a carrier with a specific PSFCH configuration is higher or lower than a selection priority of a carrier with another PSFCH configuration.
(2) A selection priority of a carrier with a long period in a PSFCH configuration is higher or lower than a selection priority of a carrier with a short period in a PSFCH configuration.
(3) A selection priority of a carrier with a PSFCH resource is higher or lower than a selection priority of a carrier without a PSFCH resource.
   Further, a selection priority of a carrier including at least one resource pool with a PSFCH resource is higher or lower than a selection priority of a carrier including resource pools none of which has a PSFCH resource.
(4) A selection priority of a carrier without a PSFCH resource is higher or lower than a selection priority of a carrier without a PSFCH resource.

Further, a selection priority of a carrier including at least one resource pool without a PSFCH resource is higher or lower than a selection priority of a carrier including resource pools all of which have PSFCH resources.

### Fourth possible example:

For example, if SCSs of at least some carriers in the plurality of carriers are different, the selection priority is determined based on at least one of the following (in other words, the selection priority needs to meet at least one of the following):
A selection priority of a carrier with a large SCS is higher or lower than a selection priority of a carrier with a small SCS.

A selection priority of a carrier with a specific SCS is higher or lower than a selection priority of a carrier with another SCS.

### Fifth possible example:

For example, if resources of at least some carriers in the plurality of carriers are different, the selection priority is determined based on at least one of the following (in other words, the selection priority needs to meet at least one of the following):
A selection priority of a carrier with a long period of a synchronization signal is higher or lower than a selection priority of a carrier with a short period of a synchronization signal;
a selection priority of a carrier with a specific period of a synchronization signal is higher or lower than a selection priority of a carrier with another period of a synchronization signal;
a selection priority of a carrier in which a quantity of synchronization slots in a period is large is higher or lower than a selection priority of a carrier in which a quantity of synchronization slots in a period is small;
a selection priority of a carrier with a specific quantity of synchronization slots in a period is higher or lower than a selection priority of a carrier with another quantity of synchronization slots in a period;
a selection priority of a carrier with a large quantity of repetitions of a synchronization signal is higher or lower than a selection priority of a carrier with a small quantity of repetitions of a synchronization signal;
a selection priority of a carrier with a specific quantity of repetitions of a synchronization signal is higher or lower than a selection priority of a carrier with another quantity of repetitions of a synchronization signal;
a priority (group) of a carrier with a large synchronization slot offset is higher or lower than that of a carrier with a small synchronization slot offset;
a priority (group) of a carrier with a specific synchronization slot offset is higher or lower than that of a carrier with another synchronization slot offset;
a selection priority of a carrier with a large time interval of a synchronization signal is higher or lower than a selection priority of a carrier with a small time interval; and
a selection priority of a carrier with a specific time interval is higher or lower than a selection priority of a carrier with another time interval.

For example, the plurality of carriers may include at least one of the following:
a plurality of carriers used for CA transmission;
a plurality of carriers used for multi-carrier transmission;
a plurality of carriers used for multi-carrier transmission;
a plurality of carriers used for SL transmission;
a first carrier set;
a second carrier set; and
a third carrier set, where
the second carrier set includes carriers available as synchronization carriers, and the third carrier set includes an available set of synchronization carriers.

For example, the plurality of carriers include at least one of the following: a plurality of carriers in an aggregated carrier, multiple carriers, at least two carriers, at least some carriers in set A, at least some carriers in set B, and at least some carriers in the first carrier set.

For example, the plurality of carriers may be at least some carriers in each item above, or at least some carriers in a plurality of items above, or an intersection between a plurality of items above, or a subset of an intersection between a plurality of items above.

For example, the plurality of carriers may be some carriers in the second carrier set, or some carriers in the third carrier set, or some carriers in the second carrier set and some carriers in the third carrier set, or same carriers in the second carrier set and the third carrier set, that is, an intersection between the second carrier set and the third carrier set.

Optionally, the carrier determining method provided in this embodiment of this application further includes the following step 203.

Step 203: Determine a synchronization reference for each carrier in the first carrier set when a predetermined condition is met.

The predetermined condition includes at least one of the following:
the first carrier set is a null set; and
a synchronization reference determined for at least one carrier is inconsistent with an allowable synchronization reference obtained based on synchronization reference priority indication information of the at least one carrier.

For example, the first carrier set may be obtained based on the synchronization reference priority indication information and/or the first information and/or a quantity of elements in the first carrier set.

The carrier determining method provided in this application is hereinafter described by using several embodiments.

### Embodiment 1

A terminal selects a carrier from a first carrier set as a synchronization carrier, where the first carrier set may be any one of the following (a), (b), (c), (d), (e), (f), and (g), or a subset of any item, or an intersection between any N items, or a subset of an intersection between any N items, where N is an integer greater than 1:
(a) set A (carriers that can potentially be used as synchronization carriers);
(b) set B (an available set of synchronization carriers);
(c) all carriers that can potentially be used for CA transmission;
(d) a carrier actually used for CA transmission;
(e) a carrier once selected for CA transmission;
(f) all carriers that can potentially be used for SL transmission;
(g) a carrier actually used for SL transmission;
(h) a carrier once selected for SL transmission; and
(i) a carrier including (for example, configured or preconfigured with) a synchronization resource.

For example, the UE selects the carrier actually used for CA transmission, and at least one carrier is included in set A. In this case, the first carrier set may be an intersection or a subset of an intersection between carriers used for CA transmission and set A, that is, all carriers (corresponding to an intersection) actually used for CA transmission and included in set A, or at least one carrier (corresponding to a subset of an intersection) actually used for CA transmission and included in set A.

For another example, if a network configures/preconfigures carriers with synchronization references, the first carrier set may be the carriers with synchronization references configured/preconfigured by the network, and the UE selects one carrier from the carriers with synchronization references configured/preconfigured by the network as the synchronization carrier (corresponding to one item).

For another example, if a network configures/preconfigures all carriers that can potentially be used for CA transmission, the first carrier set may be all the carriers that can potentially be used for CA transmission and that are configured/preconfigured by at least one network device (corresponding to a subset of one item).

### Embodiment 2

A network configures or preconfigures a carrier set {CC 1, CC 2, CC 3}, and synchronization reference priority orders of carriers in this carrier set are the same, that is, sl-NbAsSync is all true. UE selects a synchronization carrier from this carrier set, and uses a synchronization reference corresponding to the synchronization carrier as a synchronization reference of other CA carriers.

For example, with reference to Table 1, it may be assumed that a synchronization reference of CC 1 is P1, and a synchronization reference of CC 2 is P2, and a synchronization reference of CC 3 is P4. In this way, based on rule 1 (that is, a selection priority of a carrier with a high synchronization reference priority is high), the terminal may finally select a carrier with a high synchronization reference priority as a synchronization carrier, that is, the terminal selects CC 1 as the synchronization carrier.

### Embodiment 3

A network configures or preconfigures a carrier set {CC 1, CC 2, CC 3}, and a terminal selects a synchronization carrier from this carrier set, where synchronization reference priority orders of carriers in this carrier set are different.

For example, sl-NbAsSync configured for CC 1 is true, a synchronization reference priority order is P1/P2/P3/P4/P5/P6, and a synchronization reference is P1; sl-NbAsSync configured for CC 2 is true, a synchronization reference priority order is P1/P2/P3/P4/P5/P6, and a synchronization reference is P2; and sl-NbAsSync configured for CC 3 is false, a synchronization reference priority order is P1/P2/P6, and a synchronization reference is P6. Based on rule 2 (that is, in a case that synchronization reference priority orders of a plurality of carriers have an overlapping part, a selection priority of a carrier with a high synchronization reference priority in the overlapping part is high), the terminal selects a carrier with a high synchronization reference priority in the overlapping part as a synchronization carrier, that is, the terminal selects CC 3 as the synchronization carrier.

### Embodiment 4

A network configures or preconfigures a carrier set {CC 1, CC 2, CC 3}, and a terminal selects a synchronization carrier from this carrier set, where SCSs of carriers in this carrier set are the same, and synchronization reference priority orders of carriers in this carrier set are the same.

For example, sl-NbAsSync is all true, an SCS configured for CC 1 is 30 kHz, and a synchronization reference is P1; an SCS configured for CC 2 is 60 kHz, and a synchronization reference is P2; and an SCS configured for CC 3 is 120 kHz, and a synchronization reference is P4.

Based on rule 3 (in a case that synchronization reference priority orders are the same, a selection priority correspoinding to a carrier with a high SCS is high), the terminal may finally select a carrier with a large SCS as a synchronization carrier, that is, the terminal selects CC 3 as the synchronization carrier.

### Embodiment 5

A network configures or preconfigures a carrier set {CC 1, CC 2, CC 3}, and a terminal selects a synchronization carrier from this carrier set, where SCSs of carriers in this carrier set are different.

For example, an SCS configured for CC 1 is 30 kHz, an SCS configured for CC 2 is 60 kHz, and an SCS configured for CC 3 is 120 kHz.

Based on rule 4 (a selection priority of a carrier with a high SCS is high), a terminal may finally select a carrier with a large SCS as a synchronization carrier, that is, the terminal selects CC 3 as the synchronization carrier.

### Embodiment 6

A terminal determines a carrier set for selecting a synchronization carrier, where the carrier set may be a network-configured or preconfigured carrier set, or the carrier set may be determined based on at least one of the following: a network-configured or preconfigured carrier set Set 0 that can be used for carrier aggregation, and a network-configured or preconfigured carrier set set A that can be used as synchronization carriers. The terminal selects aggregated carriers in set 0, and the aggregated carriers also included in set A may be used as a carrier set of synchronization carriers.

### Embodiment 7

Optionally, in a case that a synchronization reference type parameter is a base station, a procedure for selecting a synchronization carrier is as follows:

For example, if a carrier selected by UE for CA transmission or SL transmission meets at least one of the following conditions:
the carrier is in a network-configured carrier set that may be used for CA transmission or SL transmission;
at least one carrier is included in set A; and
the network configures the synchronization reference type parameter (sl-SyncPriority) as the base station;
one carrier is selected from one or more carriers included in set A as the synchronization carrier.

For example, if the carrier selected by the UE for CA transmission meets at least one of the following conditions:
the carrier is in a preconfigured carrier set that may be used for CA transmission or SL transmission;
at least one carrier is included in set A; and
the synchronization reference type parameter (sl-SyncPriority) is preconfigured as an eNB (nnb);
a synchronization reference of one or more carriers included in set A is determined, the carriers are sorted based on the following selection priorities (P1 to P6), and a carrier with a highest priority is selected as the synchronization carrier:
   P1: a carrier whose synchronization reference is UE synchronized directly to the eNB;
   P2: a carrier whose synchronization reference is UE synchronized indirectly to the eNB;
   P3: a carrier whose synchronization reference is a GNSS;
   P4: a carrier whose synchronization reference is UE synchronized directly to the GNSS;
   P5: a carrier whose synchronization reference is UE synchronized indirectly to the GNSS; and
   P6: a carrier whose synchronization reference is remaining UEs.

It may be understood that the selection priority order is P1, P2, P3, P4, P5, and P6 sequentially from high to low.

It should be noted that if a plurality of carriers meet the condition, the UE autonomously selects one of them as the synchronization carrier.

Optionally, in a case that the synchronization reference type parameter is the GNSS, a procedure for selecting a synchronization carrier is as follows:

For example, if the carrier selected by the UE for CA transmission meets at least one of the following conditions:
the carrier is in a network-configured/preconfigured carrier set that may be used for CA transmission or SL transmission;
at least one carrier is included in set A; and
the network configures/preconfigures the synchronization reference type parameter (sl-SyncPriority) as the GNSS, and the GNSS is reliable;
a carrier whose GNSS is reliable is selected from the carriers included in set A as the synchronization carrier.

For example, if the carrier selected by the UE for CA transmission meets at least one of the following conditions:
the carrier is in a network-configured/preconfigured carrier set that may be used for CA transmission or SL transmission;
at least one carrier is included in set A; and
the network configures/preconfigures the synchronization reference type parameter (sl-SyncPriority) as the GNSS, and the GNSS is unreliable;
a synchronization reference of one or more carriers included in set A is determined, the carriers are sorted based on the following selection priorities (P1 to P6), and a carrier with a highest priority is selected as the synchronization carrier:
   P1: a carrier whose synchronization reference is UE synchronized directly to the GNSS;
   P2: a carrier whose synchronization reference is UE synchronized indirectly to the GNSS;
   P3: a CC whose synchronization reference is the gNB/eNB;
   P4: a carrier whose synchronization reference is UE synchronized directly to the gNB/eNB;
   P5: a carrier whose synchronization reference is UE synchronized indirectly to the gNB/eNB; and
   P6: a carrier whose synchronization reference is remaining UEs.

It should be noted that if a plurality of carriers meet the condition, the UE autonomously selects one of them.

It may be understood that the selection priority order is P1, P2, P3, P4, P5, and P6 sequentially from high to low.

It should be noted that if a plurality of carriers meet the condition, the UE autonomously selects one of them as the synchronization carrier.

For example, if the carrier selected by the UE for CA transmission meets at least one of the following conditions:
the carrier is in a network-configured/preconfigured carrier set that may be used for CA transmission or SL transmission; and
no carrier is included in set A;
that is, a first carrier set is a null set, the UE determines a synchronization reference for each carrier selected for CA transmission.

### Embodiment 8

If synchronization reference priority orders (sl-NbAsSync) of CA carriers, SL transmission carriers, multiple carriers, at least one carrier, set A, set B, or synchronization carriers selected by UE or preconfigured or configured by a network are different, a procedure for selecting a synchronization carrier may be based on Embodiment 2 or may be as follows:
Optionally, in a case that a synchronization reference type parameter is a base station, a procedure for selecting a synchronization carrier is the same as that in Embodiment 2.

Optionally, in a case that the synchronization reference type parameter is a GNSS:

For example, if the carrier selected by the UE for CA transmission meets at least one of the following conditions:
the carrier is in a network-configured/preconfigured carrier set that may be used for CA transmission or SL transmission;
at least one carrier is included in set A;
the network configures/preconfigures the synchronization reference type parameter (sl-SyncPriority) as the GNSS, and the GNSS is reliable; and
synchronization reference priority orders (sl-NbAsSync) of at least part of CA carriers, SL transmission carriers, multiple carriers, at least two carriers, set A, set B, or a first carrier set selected by the UE or preconfigured or configured by the network are different;
a carrier whose GNSS is reliable is selected from the carriers included in set A as the synchronization carrier.

For example, if the carrier selected by the UE for CA transmission meets at least one of the following conditions:
the carrier is in a network-configured/preconfigured carrier set that may be used for CA transmission or SL transmission;
at least one carrier is included in set A;
the network configures/preconfigures the synchronization reference type parameter (sl-SyncPriority) as the GNSS, and the GNSS is unreliable; and
synchronization reference priority orders (sl-NbAsSync) of at least part of CA carriers, SL transmission carriers, multiple carriers, at least two carriers, set A, set B, or the first carrier set selected by the UE or preconfigured or configured by the network are different;
a synchronization reference of one or more carriers included in set A is determined, and a carrier with a highest selection priority is selected as the synchronization carrier based on the following selection priorities (P1 to P6):
   P1: a carrier whose synchronization reference is UE synchronized directly to the GNSS;
   P2: a carrier whose synchronization reference is UE synchronized indirectly to the GNSS; and
   P3: a carrier whose synchronization reference is a gNB/eNB;
   P4: a carrier whose synchronization reference is UE synchronized directly to the gNB/eNB;
   P5: a carrier whose synchronization reference is UE synchronized indirectly to the gNB/eNB; and
   P6: a carrier whose synchronization reference is remaining UEs.

It may be understood that the selection priority order is P1, P2, P3, P4, P5, and P6 sequentially from high to low.

A procedure for determining a synchronization carrier based on a synchronization reference priority is illustrated by using the following example:

### Example S1:

For example, if the carrier selected by the UE for CA transmission meets at least one of the following conditions:
the carrier is in a network-configured/preconfigured carrier set that may be used for CA transmission or SL transmission;
at least one carrier is included in set A;
the network configures/preconfigures the synchronization reference type parameter (sl-SyncPriority) as the GNSS, and the GNSS is unreliable; and
synchronization reference priority orders (sl-NbAsSync) of at least part of CA carriers, SL transmission carriers, multiple carriers, at least two carriers, set A, set B, or the first carrier set selected by the UE or preconfigured or configured by the network are different;
a synchronization reference of one or more carriers included in set A is determined, a selection priority of the carrier is determined based on the following rule, and a carrier with a highest selection priority is selected as the synchronization carrier:
   P1: a carrier whose synchronization reference is UE synchronized directly to the GNSS;
   P2: a carrier whose synchronization reference is UE synchronized indirectly to the GNSS;
   P3: a carrier whose synchronization reference is the gNB/eNB;
   P4: a carrier whose synchronization reference is UE synchronized directly to the gNB/eNB;
   P5: a carrier whose synchronization reference is UE synchronized indirectly to the gNB/eNB; and
   P6: a carrier whose synchronization reference is remaining UEs.

The rule is as follows:
If a selection priority of at least one carrier is P1 or P2, the UE selects a carrier with a higher selection priority from the carriers corresponding to the selection priorities P1 and P2 as the synchronization carrier.

If priorities corresponding to all carriers are P6, the UE selects a carrier corresponding to the selection priority P6 as the synchronization carrier.

If selection priorities corresponding to all carriers configured with sl-NbAsSync false are P6, and selection priorities corresponding to at least one carrier configured with sl-NbAsSync true are P3, P4, and P5, the UE selects a carrier corresponding to the selection priority P6 as the synchronization carrier.

For example, the foregoing selection priority order may be obtained based on the synchronization reference priorities. For example, a selection priority of a carrier with a high synchronization reference priority is high.

A procedure for determining a synchronization carrier based on a synchronization reference priority order is illustrated by using the following example:

### Example S2:

For example, if the carrier selected by the UE for CA transmission meets at least one of the following conditions:
the carrier is in a network-configured/preconfigured carrier set that may be used for CA transmission or SL transmission;
at least one carrier is included in set A;
the network configures/preconfigures the synchronization reference type parameter (sl-SyncPriority) as the GNSS, and the GNSS is unreliable; and
synchronization reference priority orders (sl-NbAsSync) of at least part of CA carriers, SL transmission carriers, multiple carriers, at least two carriers, set A, set B, or the first carrier set selected by the UE or preconfigured or configured by the network are different;
a synchronization reference of one or more carriers included in set A is determined, a selection priority of the carrier is determined based on the following rule, and a carrier with a highest selection priority is selected as the synchronization carrier:
   P1: a carrier whose synchronization reference is UE synchronized directly to the GNSS;
   P2: a carrier whose synchronization reference is UE synchronized indirectly to the GNSS;
   P3: a carrier whose synchronization reference is the gNB/eNB;
   P4: a carrier whose synchronization reference is UE synchronized directly to the gNB/eNB;
   P5: a carrier whose synchronization reference is UE synchronized indirectly to the gNB/eNB; and
   P6: a carrier whose synchronization reference is remaining UEs.

The rule is as follows:
For example, a condition for determining the selection priority includes: in a case that the synchronization reference priority order has an overlapping part, and that a selection priority of a carrier with a high synchronization reference priority in the overlapping part is high, if priorities corresponding to at least one carrier are P1, P2, and P6, the UE selects a carrier with a high selection priority from the carriers corresponding to the selection priorities P1, P2, and P6 as the synchronization carrier.

For example, a condition for determining the selection priority includes: in a case that the synchronization reference priority order has an overlapping part, and that a selection priority of a carrier with a high synchronization reference priority in a non-overlapping part is high, if no carrier corresponds to selection priorities P1, P2, and P6, that is, if selection priorities corresponding to all carriers are P3, P4, and P5, the UE selects a carrier with a high selection priority from the carriers corresponding to the selection priorities P3, P4, and P5 as the synchronization carrier.

### Example S3:

If the carrier selected by the UE for CA transmission meets at least one of the following conditions:
the carrier is in a network-configured/preconfigured carrier set that may be used for CA transmission or SL transmission;
at least one carrier is included in set A;
the network configures/preconfigures the synchronization reference type parameter (sl-SyncPriority) as the GNSS, and the GNSS is unreliable; and
synchronization reference priority orders (sl-NbAsSync) of at least part of CA carriers, SL transmission carriers, multiple carriers, at least two carriers, set A, set B, or the first carrier set selected by the UE or preconfigured or configured by the network are different;
a synchronization reference of one or more carriers included in set A is determined, and the UE selects a carrier with a high synchronization reference priority as the synchronization carrier. If a synchronization reference determined for at least one carrier is inconsistent with an allowable synchronization reference obtained based on a synchronization reference priority order configured for the carrier, a synchronization reference is determined for each carrier separately.

It should be noted that if a plurality of carriers meet the selection priority, the UE autonomously selects one of them as the synchronization carrier.

### Embodiment 8

Optionally, in a case that a synchronization reference type parameter is a base station, a procedure for selecting a synchronization carrier is as follows:
For example, if a carrier selected by UE for CA transmission or SL transmission meets at least one of the following conditions:
the carrier is in a network-configured carrier set that may be used for CA transmission or SL transmission;
at least one carrier is included in set A; and
the network configures the synchronization reference type parameter (sl-SyncPriority) as the base station;
one carrier is selected from one or more carriers included in set A as the synchronization carrier.

For example, if the carrier selected by the UE for CA transmission meets at least one of the following conditions:
the carrier is in a preconfigured carrier set that may be used for CA transmission or SL transmission;
at least one carrier is included in set A; and
the synchronization reference type parameter (sl-SyncPriority) is preconfigured as the base station;
a synchronization reference of one or more carriers included in set A is determined, and a carrier with a highest priority is selected as the synchronization carrier based on the following selection priority order (P1 to P6):
   P1: a carrier whose synchronization reference is SyncRef UE and in which an SLSS ID of the SyncRef UE belongs to a set or part of a set of SLSS IDs defined within coverage and whose coverage indication parameter indicates true;
   P2: a carrier whose synchronization reference is SyncRef UE and in which an SLSS ID of the SyncRef UE belongs to a set or part of a set of SLSS IDs defined within coverage and whose coverage indication parameter indicates false;
   P3: a carrier whose synchronization reference is a GNSS;
   P4: a carrier whose synchronization reference is SyncRef UE and in which an SLSS ID of the SyncRef UE is 0 and whose coverage indication reference indicates true, or a carrier whose synchronization reference is SyncRef UE and in which an SLSS ID of the SyncRef UE is 0 and in which an SLSS is transmitted on a third set of synchronization resources;
   P5: a carrier whose synchronization reference is SyncRef UE and in which an SLSS ID of the SyncRef UE is 0 and in which an SLSS is not transmitted on a third set of synchronization resources and whose coverage indication parameter indicates false;
   P5: a carrier whose synchronization reference is SyncRef UE and in which an SLSS ID of the SyncRef UE is 337 and whose coverage indication parameter indicates false; and
   P6: a carrier whose synchronization reference is other SyncRef UEs.

It may be understood that the selection priority order is P1, P2, P3, P4, P5, and P6 sequentially from high to low.

It should be noted that if a plurality of carriers meet the condition, the UE autonomously selects one of them as the synchronization carrier.

Optionally, in a case that the synchronization reference type parameter is the GNSS, a procedure for selecting a synchronization carrier is as follows:
For example, if the carrier selected by the UE for CA transmission meets at least one of the following conditions:
the carrier is in a network-configured/preconfigured carrier set that may be used for CA transmission or SL transmission;
at least one carrier is included in set A; and
the network configures/preconfigures the synchronization reference type parameter (sl-SyncPriority) as the GNSS, and the GNSS is reliable;
a carrier whose GNSS is reliable is selected from the carriers included in set A as the synchronization carrier.

For example, if the carrier selected by the UE for CA transmission meets at least one of the following conditions:
the carrier is in a network-configured/preconfigured carrier set that may be used for CA transmission or SL transmission;
at least one carrier is included in set A; and
the network configures/preconfigures the synchronization reference type parameter (sl-SyncPriority) as the GNSS, and the GNSS is unreliable;
a synchronization reference of one or more carriers included in set A is determined, and a carrier with a highest selection priority is selected as the synchronization carrier based on the following selection priority order (P1 to P6):
   P1: a carrier whose synchronization reference is SyncRef UE and in which an SLSS ID of the SyncRef UE belongs to a set or part of a set of SLSS IDs defined within coverage and whose coverage indication parameter indicates true;
   P2: a carrier whose synchronization reference is SyncRef UE and in which an SLSS ID of the SyncRef UE belongs to a set or part of a set of SLSS IDs defined within coverage and whose coverage indication parameter indicates false;
   P3: a carrier whose synchronization reference is the GNSS;
   P4: a carrier whose synchronization reference is SyncRef UE and in which an SLSS ID of the SyncRef UE is 0 and whose coverage indication reference indicates true, or a carrier whose synchronization reference is SyncRef UE and in which an SLSS ID of the SyncRef UE is 0 and in which an SLSS is transmitted on a third set of synchronization resources;
   P5: a carrier whose synchronization reference is SyncRef UE and in which an SLSS ID of the SyncRef UE is 0 and in which an SLSS is not transmitted on a third set of synchronization resources and whose coverage indication parameter indicates false;
   P5: a carrier whose synchronization reference is SyncRef UE and in which an SLSS ID of the SyncRef UE is 337 and whose coverage indication parameter indicates false; and
   P6: a carrier whose synchronization reference is other SyncRef UEs.

It may be understood that the selection priority order is P1, P2, P3, P4, P5, and P6 sequentially from high to low.

It should be noted that if a plurality of carriers meet the condition, the UE autonomously selects one of them as the synchronization carrier.

For example, if the carrier selected by the UE for CA transmission meets at least one of the following conditions:
the carrier is in a network-configured/preconfigured carrier set that may be used for CA transmission or SL transmission; and
no carrier is included in set A;
that is, a first carrier set is a null set, the UE determines a synchronization reference for each carrier selected for CA transmission.

### Embodiment 9

If synchronization reference priority orders (sl-NbAsSync) of CA carriers, SL transmission carriers, multiple carriers, at least one carrier, set A, set B, or synchronization carriers selected by UE or preconfigured or configured by a network are different, a procedure for selecting a synchronization carrier may be based on Embodiment 2 or may be as follows:
Optionally, in a case that a synchronization reference type parameter is a base station, a procedure for selecting a synchronization carrier is the same as that in Embodiment 2.

Optionally, in a case that the synchronization reference type parameter is a GNSS:

For example, if the carrier selected by the UE for CA transmission meets at least one of the following conditions:
the carrier is in a network-configured/preconfigured carrier set that may be used for CA transmission or SL transmission;
at least one carrier is included in set A;
the network configures/preconfigures the synchronization reference type parameter (sl-SyncPriority) as the GNSS, and the GNSS is reliable; and
synchronization reference priority orders (sl-NbAsSync) of at least part of CA carriers, SL transmission carriers, multiple carriers, at least two carriers, set A, set B, or the first carrier set selected by the UE or preconfigured or configured by the network are different;
a carrier whose GNSS is reliable is selected from the carriers included in set A as the synchronization carrier.

For example, if the carrier selected by the UE for CA transmission meets at least one of the following conditions:
the carrier is in a network-configured/preconfigured carrier set that may be used for CA transmission or SL transmission;
at least one carrier is included in set A;
the network configures/preconfigures the synchronization reference type parameter (sl-SyncPriority) as the GNSS, and the GNSS is unreliable; and
synchronization reference priority orders (sl-NbAsSync) of at least part of CA carriers, SL transmission carriers, multiple carriers, at least two carriers, set A, set B, or the first carrier set selected by the UE or preconfigured or configured by the network are different;
a synchronization reference of one or more carriers included in set A is determined, and a carrier with a highest selection priority is selected as the synchronization carrier based on the following selection priorities (P1 to P6):
   P1: a carrier whose synchronization reference is SyncRef UE and in which an SLSS ID of the SyncRef UE belongs to a set or part of a set of SLSS IDs defined within coverage and whose coverage indication parameter indicates true;
   P2: a carrier whose synchronization reference is SyncRef UE and in which an SLSS ID of the SyncRef UE belongs to a set or part of a set of SLSS IDs defined within coverage and whose coverage indication parameter indicates false;
   P3: a carrier whose synchronization reference is the GNSS;
   P4: a carrier whose synchronization reference is SyncRef UE and in which an SLSS ID of the SyncRef UE is 0 and whose coverage indication reference indicates true, or a carrier whose synchronization reference is SyncRef UE and in which an SLSS ID of the SyncRef UE is 0 and in which an SLSS is transmitted on a third set of synchronization resources;
   P5: a carrier whose synchronization reference is SyncRef UE and in which an SLSS ID of the SyncRef UE is 0 and in which an SLSS is not transmitted on a third set of synchronization resources and whose coverage indication parameter indicates false;
   P5: a carrier whose synchronization reference is SyncRef UE and in which an SLSS ID of the SyncRef UE is 337 and whose coverage indication parameter indicates false; and
   P6: a carrier whose synchronization reference is other SyncRef UEs.

It may be understood that the selection priority order is P1, P2, P3, P4, P5, and P6 sequentially from high to low.

A procedure for determining a synchronization carrier based on a synchronization reference priority is illustrated by using the following example 1:

### Example 1:

For example, if the carrier selected by the UE for CA transmission meets at least one of the following conditions:
the carrier is in a network-configured/preconfigured carrier set that may be used for CA transmission or SL transmission;
at least one carrier is included in set A;
the network configures/preconfigures the synchronization reference type parameter (sl-SyncPriority) as the GNSS, and the GNSS is unreliable; and
synchronization reference priority orders (sl-NbAsSync) of at least part of CA carriers, SL transmission carriers, multiple carriers, at least two carriers, set A, set B, or the first carrier set selected by the UE or preconfigured or configured by the network are different;
a synchronization reference of one or more carriers included in set A is determined, a selection priority of the carrier is determined based on the following rule, and a carrier with a highest selection priority is selected as the synchronization carrier:
   P1: a carrier whose synchronization reference is SyncRef UE and in which an SLSS ID of the SyncRef UE belongs to a set or part of a set of SLSS IDs defined within coverage and whose coverage indication parameter indicates true;
   P2: a carrier whose synchronization reference is SyncRef UE and in which an SLSS ID of the SyncRef UE belongs to a set or part of a set of SLSS IDs defined within coverage and whose coverage indication parameter indicates false;
   P3: a carrier whose synchronization reference is the GNSS;
   P4: a carrier whose synchronization reference is SyncRef UE and in which an SLSS ID of the SyncRef UE is 0 and whose coverage indication reference indicates true, or a carrier whose synchronization reference is SyncRef UE and in which an SLSS ID of the SyncRef UE is 0 and in which an SLSS is transmitted on a third set of synchronization resources;
   P5: a carrier whose synchronization reference is SyncRef UE and in which an SLSS ID of the SyncRef UE is 0 and in which an SLSS is not transmitted on a third set of synchronization resources and whose coverage indication parameter indicates false;
   P5: a carrier whose synchronization reference is SyncRef UE and in which an SLSS ID of the SyncRef UE is 337 and whose coverage indication parameter indicates false; and
   P6: a carrier whose synchronization reference is other SyncRef UEs.

The rule is as follows:
If a selection priority of at least one carrier is P1 or P2, the UE selects a carrier with a higher selection priority from the carriers corresponding to the selection priorities P1 and P2 as the synchronization carrier.

If priorities corresponding to all carriers are P6, the UE selects a carrier corresponding to the selection priority P6 as the synchronization carrier.

If selection priorities corresponding to all carriers configured with sl-NbAsSync false are P6, and selection priorities corresponding to at least one carrier configured with sl-NbAsSync true are P3, P4, and P5, the UE selects a carrier corresponding to the selection priority P6 as the synchronization carrier.

For example, the foregoing selection priority order may be obtained based on the synchronization reference priorities. For example, a selection priority of a carrier with a high synchronization reference priority is high.

A procedure for determining a synchronization carrier based on a synchronization reference priority order is illustrated by using the following example:

### Example 2:

For example, if the carrier selected by the UE for CA transmission meets at least one of the following conditions:
the carrier is in a network-configured/preconfigured carrier set that may be used for CA transmission or SL transmission;
at least one carrier is included in set A;
the network configures/preconfigures the synchronization reference type parameter (sl-SyncPriority) as the GNSS, and the GNSS is unreliable; and
synchronization reference priority orders (sl-NbAsSync) of at least part of CA carriers, SL transmission carriers, multiple carriers, at least two carriers, set A, set B, or the first carrier set selected by the UE or preconfigured or configured by the network are different;
a synchronization reference of one or more carriers included in set A is determined, a selection priority of the carrier is determined based on the following rule, and a carrier with a highest selection priority is selected as the synchronization carrier:
   P1: a carrier whose synchronization reference is SyncRef UE and in which an SLSS ID of the SyncRef UE belongs to a set or part of a set of SLSS IDs defined within coverage and whose coverage indication parameter indicates true;
   P2: a carrier whose synchronization reference is SyncRef UE and in which an SLSS ID of the SyncRef UE belongs to a set or part of a set of SLSS IDs defined within coverage and whose coverage indication parameter indicates false;
   P3: a carrier whose synchronization reference is the GNSS;
   P4: a carrier whose synchronization reference is SyncRef UE and in which an SLSS ID of the SyncRef UE is 0 and whose coverage indication reference indicates true, or a carrier whose synchronization reference is SyncRef UE and in which an SLSS ID of the SyncRef UE is 0 and in which an SLSS is transmitted on a third set of synchronization resources;
   P5: a carrier whose synchronization reference is SyncRef UE and in which an SLSS ID of the SyncRef UE is 0 and in which an SLSS is not transmitted on a third set of synchronization resources and whose coverage indication parameter indicates false;
   P5: a carrier whose synchronization reference is SyncRef UE and in which an SLSS ID of the SyncRef UE is 337 and whose coverage indication parameter indicates false; and
   P6: a carrier whose synchronization reference is other SyncRef UEs.

The rule is as follows:
For example, a condition for determining the selection priority includes: in a case that the synchronization reference priority order has an overlapping part, and that a selection priority of a carrier with a high synchronization reference priority in the overlapping part is high, if priorities corresponding to at least one carrier are P1, P2, and P6, the UE selects a carrier with a high selection priority from the carriers corresponding to the selection priorities P1, P2, and P6 as the synchronization carrier.

For example, a condition for determining the selection priority includes: in a case that the synchronization reference priority order has an overlapping part, and that a selection priority of a carrier with a high synchronization reference priority in a non-overlapping part is high, if no carrier corresponds to selection priorities P1, P2, and P6, that is, if selection priorities corresponding to all carriers are P3, P4, and P5, the UE selects a carrier with a high selection priority from the carriers corresponding to the selection priorities P3, P4, and P5 as the synchronization carrier.

### Example 3:

If the carrier selected by the UE for CA transmission meets at least one of the following conditions:
the carrier is in a network-configured/preconfigured carrier set that may be used for CA transmission or SL transmission;
at least one carrier is included in set A;
the network configures/preconfigures the synchronization reference type parameter (sl-SyncPriority) as the GNSS, and the GNSS is unreliable; and
synchronization reference priority orders (sl-NbAsSync) of at least part of CA carriers, SL transmission carriers, multiple carriers, at least two carriers, set A, set B, or the first carrier set selected by the UE or preconfigured or configured by the network are different;
a synchronization reference of one or more carriers included in set A is determined, and the UE selects a carrier with a high synchronization reference priority as the synchronization carrier. If a synchronization reference determined for at least one carrier is inconsistent with an allowable synchronization reference obtained based on a synchronization reference priority order configured for the carrier, a synchronization reference is determined for each carrier separately.

It should be noted that if a plurality of carriers meet the selection priority, the UE autonomously selects one of them as the synchronization carrier.

### Embodiment 10

Optionally, in a case that a synchronization reference type parameter is a base station, a procedure for selecting a synchronization carrier is as follows:
For example, if a carrier selected by UE for CA transmission or SL transmission meets at least one of the following conditions:
the carrier is in a network-configured carrier set that may be used for CA transmission or SL transmission;
at least one carrier is included in set A; and
the network configures the synchronization reference type parameter (sl-SyncPriority) as the base station;
one carrier is selected from one or more carriers included in set A as the synchronization carrier.

For example, if the carrier selected by the UE for CA transmission meets at least one of the following conditions:
the carrier is in a preconfigured carrier set that may be used for CA transmission or SL transmission;
at least one carrier is included in set A; and
the synchronization reference type parameter (sl-SyncPriority) is preconfigured as the base station;
a synchronization reference of one or more carriers included in set A is determined, and a carrier with a highest priority is selected as the synchronization carrier based on the following selection priority order (P1 to P6):
   P1: a carrier whose synchronization reference is SyncRef UE and in which an SLSS ID of the SyncRef UE is 0 and whose coverage indication reference indicates true, or a carrier whose synchronization reference is SyncRef UE and in which an SLSS ID of the SyncRef UE is 0 and in which an SLSS is transmitted on a third set of synchronization resources;
   P2: a carrier whose synchronization reference is SyncRef UE and in which an SLSS ID of the SyncRef UE is 0 and in which an SLSS is not transmitted on a third set of synchronization resources and whose coverage indication parameter indicates false;
   P2: a carrier whose synchronization reference is SyncRef UE and in which an SLSS ID of the SyncRef UE is 337 and whose coverage indication parameter indicates false;
   P3: a carrier whose synchronization reference is a gNB/eNB;
   P4: a carrier whose synchronization reference is SyncRef UE and in which an SLSS ID of the SyncRef UE belongs to a set or part of a set of SLSS IDs defined within coverage and whose coverage indication parameter indicates true;
   P5: a carrier whose synchronization reference is SyncRef UE and in which an SLSS ID of the SyncRef UE belongs to a set or part of a set of SLSS IDs defined within coverage and whose coverage indication parameter indicates false; and
   P6: a carrier whose synchronization reference is other SyncRef UEs.

It may be understood that the selection priority order is P1, P2, P3, P4, P5, and P6 sequentially from high to low.

It should be noted that if a plurality of carriers meet the condition, the UE autonomously selects one of them as the synchronization carrier.

Optionally, in a case that the synchronization reference type parameter is a GNSS, a procedure for selecting a synchronization carrier is as follows:
For example, if the carrier selected by the UE for CA transmission meets at least one of the following conditions:
the carrier is in a network-configured/preconfigured carrier set that may be used for CA transmission or SL transmission;
at least one carrier is included in set A; and
the network configures/preconfigures the synchronization reference type parameter (sl-SyncPriority) as the GNSS, and the GNSS is reliable;
a carrier whose GNSS is reliable is selected from the carriers included in set A as the synchronization carrier.

For example, if the carrier selected by the UE for CA transmission meets at least one of the following conditions:
the carrier is in a network-configured/preconfigured carrier set that may be used for CA transmission or SL transmission;
at least one carrier is included in set A; and
the network configures/preconfigures the synchronization reference type parameter (sl-SyncPriority) as the GNSS, and the GNSS is unreliable;
a synchronization reference of one or more carriers included in set A is determined, and a carrier with a highest selection priority is selected as the synchronization carrier based on the following selection priority order (P1 to P6):
   P1: a carrier whose synchronization reference is SyncRef UE and in which an SLSS ID of the SyncRef UE is 0 and whose coverage indication reference indicates true, or a carrier whose synchronization reference is SyncRef UE and in which an SLSS ID of the SyncRef UE is 0 and in which an SLSS is transmitted on a third set of synchronization resources;
   P2: a carrier whose synchronization reference is SyncRef UE and in which an SLSS ID of the SyncRef UE is 0 and in which an SLSS is not transmitted on a third set of synchronization resources and whose coverage indication parameter indicates false;
   P2: a carrier whose synchronization reference is SyncRef UE and in which an SLSS ID of the SyncRef UE is 337 and whose coverage indication parameter indicates false;
   P3: a carrier whose synchronization reference is the gNB/eNB;
   P4: a carrier whose synchronization reference is SyncRef UE and in which an SLSS ID of the SyncRef UE belongs to a set or part of a set of SLSS IDs defined within coverage and whose coverage indication parameter indicates true;
   P5: a carrier whose synchronization reference is SyncRef UE and in which an SLSS ID of the SyncRef UE belongs to a set or part of a set of SLSS IDs defined within coverage and whose coverage indication parameter indicates false; and
   P6: a carrier whose synchronization reference is other SyncRef UEs.

It may be understood that the selection priority order is P1, P2, P3, P4, P5, and P6 sequentially from high to low.

It should be noted that if a plurality of carriers meet the condition, the UE autonomously selects one of them as the synchronization carrier.

For example, if the carrier selected by the UE for CA transmission meets at least one of the following conditions:
the carrier is in a network-configured/preconfigured carrier set that may be used for CA transmission or SL transmission; and
no carrier is included in set A;
that is, a first carrier set is a null set, the UE determines a synchronization reference for each carrier selected for CA transmission.

### Embodiment 11

If synchronization reference priority orders (sl-NbAsSync) of CA carriers, SL transmission carriers, multiple carriers, at least one carrier, set A, set B, or synchronization carriers selected by UE or preconfigured or configured by a network are different, a procedure for selecting a synchronization carrier may be based on Embodiment 2 or may be as follows:
Optionally, in a case that a synchronization reference type parameter is a base station, a procedure for selecting a synchronization carrier is the same as that in Embodiment 2.

Optionally, in a case that the synchronization reference type parameter is a GNSS:

For example, if the carrier selected by the UE for CA transmission meets at least one of the following conditions:
the carrier is in a network-configured/preconfigured carrier set that may be used for CA transmission or SL transmission;
at least one carrier is included in set A;
the network configures/preconfigures the synchronization reference type parameter (sl-SyncPriority) as the GNSS, and the GNSS is reliable; and
synchronization reference priority orders (sl-NbAsSync) of at least part of CA carriers, SL transmission carriers, multiple carriers, at least two carriers, set A, set B, or the first carrier set selected by the UE or preconfigured or configured by the network are different;
a carrier whose GNSS is reliable is selected from the carriers included in set A as the synchronization carrier.

For example, if the carrier selected by the UE for CA transmission meets at least one of the following conditions:
the carrier is in a network-configured/preconfigured carrier set that may be used for CA transmission or SL transmission;
at least one carrier is included in set A;
the network configures/preconfigures the synchronization reference type parameter (sl-SyncPriority) as the GNSS, and the GNSS is unreliable; and
synchronization reference priority orders (sl-NbAsSync) of at least part of CA carriers, SL transmission carriers, multiple carriers, at least two carriers, set A, set B, or the first carrier set selected by the UE or preconfigured or configured by the network are different;
a synchronization reference of one or more carriers included in set A is determined, and a carrier with a highest selection priority is selected as the synchronization carrier based on the following selection priorities (P1 to P6):
   P1: a carrier whose synchronization reference is SyncRef UE and in which an SLSS ID of the SyncRef UE is 0 and whose coverage indication reference indicates true, or a carrier whose synchronization reference is SyncRef UE and in which an SLSS ID of the SyncRef UE is 0 and in which an SLSS is transmitted on a third set of synchronization resources;
   P2: a carrier whose synchronization reference is SyncRef UE and in which an SLSS ID of the SyncRef UE is 0 and in which an SLSS is not transmitted on a third set of synchronization resources and whose coverage indication parameter indicates false;
   P2: a carrier whose synchronization reference is SyncRef UE and in which an SLSS ID of the SyncRef UE is 337 and whose coverage indication parameter indicates false;
   P3: a carrier whose synchronization reference is a gNB/eNB;
   P4: a carrier whose synchronization reference is SyncRef UE and in which an SLSS ID of the SyncRef UE belongs to a set or part of a set of SLSS IDs defined within coverage and whose coverage indication parameter indicates true;
   P5: a carrier whose synchronization reference is SyncRef UE and in which an SLSS ID of the SyncRef UE belongs to a set or part of a set of SLSS IDs defined within coverage and whose coverage indication parameter indicates false; and
   P6: a carrier whose synchronization reference is other SyncRef UEs.

It may be understood that the selection priority order is P1, P2, P3, P4, P5, and P6 sequentially from high to low.

A procedure for determining a synchronization carrier based on a synchronization reference priority is illustrated by using the following example 1:

### Example 1:

For example, if the carrier selected by the UE for CA transmission meets at least one of the following conditions:
the carrier is in a network-configured/preconfigured carrier set that may be used for CA transmission or SL transmission;
at least one carrier is included in set A;
the network configures/preconfigures the synchronization reference type parameter (sl-SyncPriority) as the GNSS, and the GNSS is unreliable; and
synchronization reference priority orders (sl-NbAsSync) of at least part of CA carriers, SL transmission carriers, multiple carriers, at least two carriers, set A, set B, or the first carrier set selected by the UE or preconfigured or configured by the network are different;
a synchronization reference of one or more carriers included in set A is determined, a selection priority of the carrier is determined based on the following rule, and a carrier with a highest selection priority is selected as the synchronization carrier:
   P1: a carrier whose synchronization reference is SyncRef UE and in which an SLSS ID of the SyncRef UE is 0 and whose coverage indication reference indicates true, or a carrier whose synchronization reference is SyncRef UE and in which an SLSS ID of the SyncRef UE is 0 and in which an SLSS is transmitted on a third set of synchronization resources;
   P2: a carrier whose synchronization reference is SyncRef UE and in which an SLSS ID of the SyncRef UE is 0 and in which an SLSS is not transmitted on a third set of synchronization resources and whose coverage indication parameter indicates false;
   P2: a carrier whose synchronization reference is SyncRef UE and in which an SLSS ID of the SyncRef UE is 337 and whose coverage indication parameter indicates false;
   P3: a carrier whose synchronization reference is the gNB/eNB;
   P4: a carrier whose synchronization reference is SyncRef UE and in which an SLSS ID of the SyncRef UE belongs to a set or part of a set of SLSS IDs defined within coverage and whose coverage indication parameter indicates true;
   P5: a carrier whose synchronization reference is SyncRef UE and in which an SLSS ID of the SyncRef UE belongs to a set or part of a set of SLSS IDs defined within coverage and whose coverage indication parameter indicates false; and
   P6: a carrier whose synchronization reference is other SyncRef UEs.

It may be understood that the selection priority order is P1, P2, P3, P4, P5, and P6 sequentially from high to low.

The rule is as follows:
If a selection priority of at least one carrier is P1 or P2, the UE selects a carrier with a higher selection priority from the carriers corresponding to the selection priorities P1 and P2 as the synchronization carrier.

If priorities corresponding to all carriers are P6, the UE selects a carrier corresponding to the selection priority P6 as the synchronization carrier.

If selection priorities corresponding to all carriers configured with sl-NbAsSync false are P6, and selection priorities corresponding to at least one carrier configured with sl-NbAsSync true are P3, P4, and P5, the UE selects a carrier corresponding to the selection priority P6 as the synchronization carrier.

For example, the foregoing selection priority order may be obtained based on the synchronization reference priorities. For example, a selection priority of a carrier with a high synchronization reference priority is high.

A procedure for determining a synchronization carrier based on a synchronization reference priority order is illustrated by using the following example:

### Example 2:

For example, if the carrier selected by the UE for CA transmission meets at least one of the following conditions:
the carrier is in a network-configured/preconfigured carrier set that may be used for CA transmission or SL transmission;
at least one carrier is included in set A;
the network configures/preconfigures the synchronization reference type parameter (sl-SyncPriority) as the GNSS, and the GNSS is unreliable; and
synchronization reference priority orders (sl-NbAsSync) of at least part of CA carriers, SL transmission carriers, multiple carriers, at least two carriers, set A, set B, or the first carrier set selected by the UE or preconfigured or configured by the network are different;
a synchronization reference of one or more carriers included in set A is determined, a selection priority of the carrier is determined based on the following rule, and a carrier with a highest selection priority is selected as the synchronization carrier:
   P1: a carrier whose synchronization reference is SyncRef UE and in which an SLSS ID of the SyncRef UE is 0 and whose coverage indication reference indicates true, or a carrier whose synchronization reference is SyncRef UE and in which an SLSS ID of the SyncRef UE is 0 and in which an SLSS is transmitted on a third set of synchronization resources;
   P2: a carrier whose synchronization reference is SyncRef UE and in which an SLSS ID of the SyncRef UE is 0 and in which an SLSS is not transmitted on a third set of synchronization resources and whose coverage indication parameter indicates false;
   P2: a carrier whose synchronization reference is SyncRef UE and in which an SLSS ID of the SyncRef UE is 337 and whose coverage indication parameter indicates false;
   P3: a carrier whose synchronization reference is the gNB/eNB;
   P4: a carrier whose synchronization reference is SyncRef UE and in which an SLSS ID of the SyncRef UE belongs to a set or part of a set of SLSS IDs defined within coverage and whose coverage indication parameter indicates true;
   P5: a carrier whose synchronization reference is SyncRef UE and in which an SLSS ID of the SyncRef UE belongs to a set or part of a set of SLSS IDs defined within coverage and whose coverage indication parameter indicates false; and
   P6: a carrier whose synchronization reference is other SyncRef UEs.

It may be understood that the selection priority order is P1, P2, P3, P4, P5, and P6 sequentially from high to low.

The rule is as follows:
For example, a condition for determining the selection priority includes: in a case that the synchronization reference priority order has an overlapping part, and that a selection priority of a carrier with a high synchronization reference priority in the overlapping part is high, if priorities corresponding to at least one carrier are P1, P2, and P6, the UE selects a carrier with a high selection priority from the carriers corresponding to the selection priorities P1, P2, and P6 as the synchronization carrier.

For example, a condition for determining the selection priority includes: in a case that the synchronization reference priority order has an overlapping part, and that a selection priority of a carrier with a high synchronization reference priority in a non-overlapping part is high, if no carrier corresponds to selection priorities P1, P2, and P6, that is, if selection priorities corresponding to all carriers are P3, P4, and P5, the UE selects a carrier with a high selection priority from the carriers corresponding to the selection priorities P3, P4, and P5 as the synchronization carrier.

### Example 3:

If the carrier selected by the UE for CA transmission meets at least one of the following conditions:
the carrier is in a network-configured/preconfigured carrier set that may be used for CA transmission or SL transmission;
at least one carrier is included in set A;
the network configures/preconfigures the synchronization reference type parameter (sl-SyncPriority) as the GNSS, and the GNSS is unreliable; and
synchronization reference priority orders (sl-NbAsSync) of at least part of CA carriers, SL transmission carriers, multiple carriers, at least two carriers, set A, set B, or the first carrier set selected by the UE or preconfigured or configured by the network are different;
a synchronization reference of one or more carriers included in set A is determined, and the UE selects a carrier with a high synchronization reference priority as the synchronization carrier. If a synchronization reference determined for at least one carrier is inconsistent with an allowable synchronization reference obtained based on a synchronization reference priority order configured for the carrier, a synchronization reference is determined for each carrier separately.

The carrier determining method provided in the embodiments of this application may be performed by a carrier determining apparatus. A carrier determining apparatus provided in the embodiments of this application is described by assuming that the carrier determining method in the embodiments of this application is performed by the carrier determining apparatus.

FIG. 3 shows a carrier determining apparatus according to an embodiment of this application. The apparatus 300 includes a determining module 301.

The determining module 301 is configured to determine a second carrier and/or a plurality of third carriers from a plurality of first carriers based on first information of at least some carriers in the plurality of first carriers, where
the second carrier is used to determine synchronization information of the second carrier and/or synchronization information of a fourth carrier;
the plurality of third carriers are used for sidelink SL transmission;
the plurality of first carriers meet a first condition; and
the plurality of third carriers meet a second condition.

In some possible embodiments, the first condition includes at least one of the following:
synchronization reference orders of at least some carriers are the same, or synchronization reference orders of at least some carriers are different;
synchronization reference priority indication information of at least some carriers is the same, or synchronization reference priority indication information of at least some carriers is the same;
first indication information of at least some carriers is the same, or first indication information of at least some carriers is different;
HARQ configurations of at least some carriers are the same, or HARQ configurations of at least some carriers are different;
PSFCH configurations of at least some carriers are the same, or PSFCH configurations of at least some carriers are different;
SCS configurations of at least some carriers are the same, or SCS configurations of at least some carriers are different;
synchronization resources corresponding to at least some carriers are the same, or synchronization resources corresponding to at least some carriers are different;
start symbols of at least some carriers are the same, or start symbols of at least some carriers are different; and
quantities of symbols occupied by at least some carriers are the same, or quantities of symbols occupied by at least some carriers are different, where
the first indication information is used to indicate at least one of the following:
   whether at least one specific synchronization reference needs to be monitored;
   whether at least one specific synchronization reference needs to be skipped; and
   whether to synchronize directly or indirectly to at least one specific synchronization reference;
   the HARQ configuration is used to indicate whether HARQ is enabled;
   the PSFCH configuration includes at least one of the following: a period of a PSFCH, a time domain position of the PSFCH, a frequency domain position of the PSFCH, configuration information indicating whether a PSFCH resource is configured, and a minimum interval between data and a corresponding PSFCH for feeding back the data;
   the synchronization resource includes at least one of the following: a period of a synchronization signal, a quantity of synchronization slots in the period of the synchronization signal, a quantity of repetitions of the synchronization signal, a synchronization slot offset, a time interval of the synchronization signal, and an SCS; and
   the SCS includes at least one of the following: an SCS of the synchronization signal and an SCS of a carrier.

In some possible embodiments, the second condition includes at least one of the following:
synchronization reference orders of at least some carriers are the same;
synchronization reference priority indication information of at least some carriers is the same;
first indication information of at least some carriers is the same;
HARQ configurations of at least some carriers are the same;
PSFCH configurations of at least some carriers are the same;
SCS configurations of at least some carriers are the same;
synchronization resources included in at least some carriers are the same;
start symbols of at least some carriers are the same; and
quantities of symbols occupied by at least some carriers are the same, where the first indication information is used to indicate at least one of the following:
   whether at least one specific synchronization reference needs to be monitored;
   whether at least one specific synchronization reference needs to be skipped; and
   whether to synchronize directly or indirectly to at least one specific synchronization reference;
   the HARQ configuration is used to indicate whether HARQ is enabled;
   the PSFCH configuration includes at least one of the following: a period of a PSFCH, a time domain position of the PSFCH, a frequency domain position of the PSFCH, configuration information indicating whether a PSFCH resource is configured, and a minimum interval between data and a corresponding PSFCH for feeding back the data;
   the synchronization resource includes at least one of the following: a period of a synchronization signal, a quantity of synchronization slots in the period of the synchronization signal, a quantity of repetitions of the synchronization signal, a synchronization slot offset, a time interval of the synchronization signal, and an SCS; and
   the SCS includes at least one of the following: an SCS of the synchronization signal and an SCS of a carrier.

In some possible embodiments, the first information includes at least one of the following:
a synchronization reference order;
synchronization reference priority indication information;
first indication information;
a HARQ configuration;
a PSFCH configuration;
an SCS configuration;
an included synchronization resource;
a start symbol; and
a quantity of occupied symbols.

The first indication information is used to indicate at least one of the following:
whether at least one specific synchronization reference needs to be monitored;
whether at least one specific synchronization reference needs to be skipped; and
whether to synchronize directly or indirectly to at least one specific synchronization reference;
the synchronization reference order includes at least one of the following:
   a priority order or priority group order of synchronization references;
   a priority order of services;
   a priority order of synchronization resources;
   an order of signal strength; and
   an order of searched time points;
   the HARQ configuration is used to indicate whether HARQ is enabled;
   the PSFCH configuration includes at least one of the following: a period of a PSFCH, a time domain position of the PSFCH, a frequency domain position of the PSFCH, configuration information indicating whether a PSFCH resource is configured, and a minimum interval between data and a corresponding PSFCH for feeding back the data;
   the synchronization resource includes at least one of the following: a period of a synchronization signal, a quantity of synchronization slots in the period of the synchronization signal, a quantity of repetitions of the synchronization signal, a synchronization slot offset, a time interval of the synchronization signal, and an SCS; and
   the SCS includes at least one of the following: an SCS of the synchronization signal and an SCS of a carrier.

In some possible embodiments, the plurality of first carriers include at least one of the following:
a plurality of carriers used for CA transmission;
a plurality of carriers used for multi-carrier transmission;
a plurality of carriers used for SL transmission;
a first carrier set;
a second carrier set; and
a third carrier set, where
the second carrier set includes carriers available as synchronization carriers, and the third carrier set includes an available set of synchronization carriers.

In some possible embodiments, the determining module 301 is specifically configured to determine the second carrier from the plurality of first carriers based on a first rule, where
the first rule includes at least one of the following:
determining the second carrier based on a selection priority;
determining that a carrier whose signal quality meets the first condition is the second carrier;
determining that a carrier whose searched time point meets the second condition is the second carrier;
determining that a carrier whose synchronization reference type priority meets a third condition is the second carrier;
determining that a carrier whose HARQ configuration is enabled or not enabled is the second carrier;
determining that a carrier whose period in a PSFCH configuration meets a fourth condition is the second carrier;
determining that a carrier whose resource pool meets a fifth condition is the second carrier;
determining that a carrier whose second priority meets a sixth condition is the second carrier; and
determining that a carrier whose synchronization resource meets a seventh condition is the second carrier, where
the second priority includes at least one of the following:
   a priority or priority group of a synchronization reference;
   a priority of a service; and
   a priority of a synchronization resource; and
   the synchronization resource includes at least one of the following:
      a period of a synchronization signal;
      a quantity of synchronization slots in the period of the synchronization signal;
      a quantity of repetitions of the synchronization signal;
      a synchronization slot offset;
      a time interval of the synchronization signal; and
      an SCS, where the SCS includes at least one of the following: an SCS of an S-SSB and an SCS of a carrier.

In some possible embodiments, the carrier meeting the first condition includes at least one of the following:
a carrier with highest signal strength;
a carrier with lowest signal strength; and
a carrier whose signal strength is a first threshold;
   and/or
the carrier meeting the second condition includes at least one of the following:
   a carrier whose searched time point is earliest;
   a carrier whose searched time point is latest; and
   a carrier whose searched time point is a predetermined time point;
      and/or
   the carrier meeting the third condition includes at least one of the following:
      a carrier whose synchronization reference type priority is highest;
      a carrier whose synchronization reference type priority is lowest; and
      a carrier whose synchronization reference type priority is a predetermined synchronization reference priority;
         and/or
      the carrier meeting the fourth condition includes at least one of the following:
         a carrier whose period in a PSFCH configuration is longest;
         a carrier whose period in a PSFCH configuration is shortest; and
         a carrier whose period in a PSFCH configuration is a first predetermined period; and/or
         the carrier meeting the fifth condition includes at least one of the following:
            a carrier including at least one resource pool with a PSFCH resource;
            a carrier including at least one resource pool without a PSFCH resource;
               a carrier including resource pools none of which has a PSFCH resource; and
               a carrier including resource pools all of which have PSFCH resources;
                  and/or
               the carrier meeting the sixth condition includes at least one of the following:
                  a carrier whose priority is highest;
                  a carrier whose priority is lowest; and
                  a carrier whose priority is a predetermined priority.

8. The method according to claim 6, where
the carrier meeting the seventh condition includes at least one of the following:
a carrier in which a period of a synchronization signal is longest;
a carrier in which a period of a synchronization signal is shortest;
a carrier in which a period of a synchronization signal is a second predetermined period;
a carrier in which a quantity of synchronization slots in a period is largest;
a carrier in which a quantity of synchronization slots in a period is smallest;

a carrier in which a quantity of synchronization slots in a period is a predetermined slot quantity;
a carrier in which a quantity of repetitions of a synchronization signal is largest;
a carrier in which a quantity of repetitions of a synchronization signal is smallest;
a carrier in which a quantity of repetitions of a synchronization signal is a predetermined repetition quantity;
a carrier in which a synchronization slot offset is largest;
a carrier in which a synchronization slot offset is smallest;
a carrier in which a synchronization slot offset is a predetermined offset;
a carrier in which a time interval of a synchronization signal is longest;
a carrier in which a time interval of a synchronization signal is a predetermined time interval;
   a carrier whose SCS is largest;
   a carrier whose SCS is smallest; and
a carrier whose SCS is a predetermined SCS.

In some possible embodiments, the selection priority is determined based on at least one of the following:
a selection priority relationship; and
a selection priority order.

In some possible embodiments, the determining the second carrier based on a selection priority includes at least one of the following:
determining that a carrier whose selection priority is highest is the second carrier;
determining that a carrier whose selection priority is higher than a first predetermined selection priority is the second carrier;
determining that a carrier whose selection priority is lowest is the second carrier;
determining that a carrier whose selection priority is lower than a second predetermined selection priority is the second carrier; and
determining that a carrier whose selection priority is a third selection priority is the second carrier.

In some possible embodiments, the selection priority is determined based on at least one of the following:
a protocol specification;
a network configuration;
a preconfiguration;
a network indication;
synchronization reference priority indication information;
first indication information;
a synchronization reference order;
a synchronization reference type;
a synchronization parameter configuration mode;
a second priority;
a HARQ configuration;
a PSFCH configuration;
an SCS configuration;
a synchronization resource;
a carrier frequency; and
a carrier index.

In some possible embodiments, the selection priority order is determined based on at least one of the following:
synchronization reference priority indication information;
first indication information;
a synchronization reference order;
a synchronization reference type;
a synchronization parameter configuration mode;
a second priority;
a HARQ configuration;
a PSFCH configuration;
an SCS configuration;
a synchronization resource;
a carrier frequency; and
a carrier index.

In some possible embodiments, the first indication information is used to indicate at least one of the following:
whether at least one specific synchronization reference needs to be monitored;
whether at least one specific synchronization reference needs to be skipped; and
whether to synchronize directly or indirectly to at least one specific synchronization reference; and/or
the synchronization reference order includes at least one of the following:
   a priority order or priority group order of synchronization references;
   a priority order of services;
   a priority order of synchronization resources;
   an order of signal strength; and
   an order of searched time points;
      and/or
   the synchronization reference type includes at least one of the following: a gNB, an eNB, a GNSS, UE, and a UE internal clock;
      and/or
   the synchronization parameter configuration mode includes at least one of the following: a network configuration and a preconfiguration;
      and/or
   the second priority includes at least one of the following:
      a priority or priority group of a synchronization reference;
      a priority of a service; and
      a priority of a synchronization resource;
         and/or
      the HARQ configuration is used to indicate whether HARQ is enabled;
         and/or
      the PSFCH configuration includes at least one of the following: a period of a PSFCH, a time domain position of the PSFCH, a frequency domain position of the PSFCH, configuration information indicating whether a PSFCH resource is configured, and a minimum interval between data and a corresponding PSFCH for feeding back the data;
         and/or
      the synchronization resource includes at least one of the following:
         a period of a synchronization signal;
         a quantity of synchronization slots in the period of the synchronization signal;
         a quantity of repetitions of the synchronization signal;
         a synchronization slot offset;
         a time interval of the synchronization signal; and
         an SCS, where the SCS includes at least one of the following: an SCS of an S-SSB and an SCS of a carrier.

In some possible embodiments, the selection priority order is determined based on at least one of the following:
determined based on a synchronization reference order of a carrier;
determined based on a first order corresponding to an overlapping part in a case that a synchronization reference order of a carrier includes the overlapping part;
determined based on a synchronization reference order corresponding to a non-overlapping part other than an overlapping part in a case that a synchronization reference order of a carrier includes the overlapping part; and
determined based on an arrangement order of carriers.

In some possible embodiments, the selection priority order meets at least one of the following:
a selection priority of a carrier with a high synchronization reference priority is higher than a selection priority of a carrier with a low synchronization reference priority or lower than a selection priority of a carrier with a low synchronization reference priority;
a synchronization reference priority order of a carrier includes an overlapping part, and a selection priority of a carrier with a high synchronization reference priority in the overlapping part is higher than a selection priority of a carrier with a low synchronization reference priority in the overlapping part, or lower than a selection priority of a carrier with a low synchronization reference priority in the overlapping part; and
a synchronization reference priority order of a carrier includes an overlapping part, and a selection priority of a carrier with a high synchronization reference priority in a non-overlapping part other than the overlapping part is higher than a selection priority of a carrier with a low synchronization reference priority in the non-overlapping part, or lower than a selection priority of a carrier with a low synchronization reference priority in the non-overlapping part.

In some possible embodiments, the selection priority order is determined based on at least one of the following:
a selection priority of a carrier with a first synchronization reference is higher or lower than a selection priority of a carrier with a second synchronization reference, where an order of the first synchronization reference is higher than an order of the second synchronization reference, and/or the first synchronization reference is a predetermined synchronization reference;
a selection priority of a carrier with a first HARQ configuration is higher or lower than a selection priority of a carrier with another HARQ configuration different from the first HARQ configuration, where the first HARQ configuration is a predetermined HARQ configuration;
a selection priority of a carrier with a first PSFCH configuration is higher or lower than a selection priority of a carrier with a second PSFCH configuration; and
a selection priority of a carrier with a first SCS is higher or lower than a selection priority of a carrier with a second SCS, where the first SCS is greater than the second SCS, and/or the first SCS is a predetermined SCS.

In some possible embodiments, the first PSFCH configuration and the second PSFCH configuration meet at least one of the following:
a period in the first PSFCH configuration is longer than a period in the second PSFCH configuration;
a period in the first PSFCH configuration is shorter than a period in the second PSFCH configuration;
the first PSFCH configuration is a predetermined PSFCH configuration; and
the carrier with the first PSFCH configuration is a carrier with a PSFCH resource, and the carrier with the second PSFCH configuration is a carrier without a PSFCH resource; or the carrier with the first PSFCH configuration is a carrier without a PSFCH resource, and the carrier with the second PSFCH configuration is a carrier with a PSFCH resource.

In some possible embodiments, the selection priority order is determined based on at least one of the following:
a selection priority of a carrier with a first synchronization signal is higher or lower than a selection priority of a carrier with a second synchronization signal, where a period of the first synchronization signal is longer than a period of the second synchronization signal, and/or the period of the first synchronization signal is a third predetermined period;
a selection priority of a carrier in which a quantity of synchronization slots in a period is a first value is higher or lower than a selection priority of a carrier in which a quantity of synchronization slots in a period is a second value, where the first value is greater than the second value, and/or the first value is a first predetermined value;
a selection priority of a carrier in which a quantity of repetitions of a synchronization signal is a third value is higher or lower than a selection priority of a carrier in which a quantity of repetitions of a synchronization signal is a fourth value, where the third value is greater than the fourth value, and/or the third value is a second predetermined value;
a selection priority of a carrier with a first synchronization slot offset is higher or lower than a selection priority of a carrier with a second synchronization slot offset, where the first synchronization slot offset is greater than the second synchronization slot offset, and/or the first synchronization slot offset is a predetermined synchronization slot offset; and
a selection priority of a carrier with a first time interval of a synchronization signal is higher or lower than a selection priority of a carrier with a second time interval, where the first time interval is longer than the second time interval, and/or the first time interval is a predetermined time interval.

In some possible embodiments, the first carrier set is determined based on at least one of the following:
a carrier in the second carrier set;
a carrier in the third carrier set;
all carriers available for carrier aggregation CA transmission;
a carrier actually used for CA transmission;
a carrier once selected for CA transmission;
all carriers available for multi-carrier transmission;
a carrier actually used for multi-carrier transmission;
a carrier once selected for multi-carrier transmission;
all carriers available for SL transmission;
a carrier actually used for SL transmission;
a carrier once selected for SL transmission; and
a carrier including a synchronization resource, where
the second carrier set includes the carriers available as the synchronization carriers, and the third carrier set includes the available set of synchronization carriers.

In some possible embodiments, the fourth carrier may include at least one of the following:
a carrier in a second carrier set;
a carrier in a third carrier set;
all carriers available for carrier aggregation CA transmission;
a carrier actually used for CA transmission;
a carrier once selected for CA transmission;
all carriers available for multi-carrier transmission;
a carrier actually used for multi-carrier transmission;
a carrier once selected for multi-carrier transmission;
all carriers available for SL transmission;
a carrier actually used for SL transmission;
a carrier once selected for SL transmission; and
a carrier including a synchronization resource, where
the second carrier set includes carriers available as synchronization carriers, and the third carrier set includes an available set of synchronization carriers.

According to the carrier determining apparatus provided in this embodiment of this application, the apparatus determines the second carrier and/or the plurality of third carriers from the plurality of first carriers based on the first information of at least some carriers in the plurality of first carriers, where the second carrier is used to determine the synchronization information of the second carrier and/or the synchronization information of the fourth carrier; the plurality of third carriers are used for sidelink SL transmission; the plurality of first carriers meet the first condition; and the plurality of third carriers meet the second condition. By using this method, the terminal may determine the second carrier, and determine the synchronization information of the second carrier and synchronization information of other carriers by using the second carrier, and perform sidelink transmission by using the third carrier, so that timing synchronization of each carrier can be implemented during sidelink data transmission, thereby improving reliability of a communication system.

The carrier determining apparatus in this embodiment of this application may be an electronic device, for example, an electronic device with an operating system, or may be a component in an electronic device, for example, an integrated circuit or a chip. The electronic device may be a terminal, or may be other devices than a terminal. For example, the terminal may include but is not limited to the foregoing illustrated type of the terminal 11. The other devices may be a server, a network attached storage (Network Attached Storage, NAS), and the like. This is not specifically limited in this embodiment of this application.

The carrier determining apparatus provided in this embodiment of this application can implement each process implemented in the method embodiment in FIG. 1 and FIG. 2, with the same technical effect achieved. To avoid repetition, details are not described herein again.

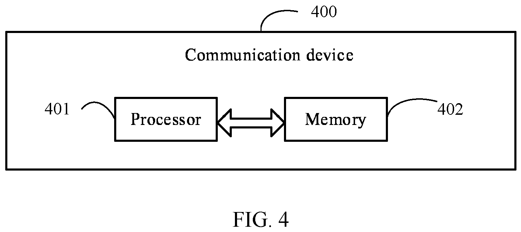

Optionally, as shown in FIG. 4, an embodiment of this application further provides a communication device 400, including a processor 401 and a memory 402. The memory 402 stores a program or instructions capable of running on the processor 401. For example, when the communication device 400 is a terminal, and the program or instructions are executed by the processor 401, the steps of the foregoing embodiment of the carrier determining method are implemented, with the same technical effect achieved. When the communication device 400 is a network-side device, and the program or instructions are executed by the processor 401, the steps of the foregoing embodiment of the carrier determining method are implemented, with the same technical effect achieved. To avoid repetition, details are not described herein again.

An embodiment of this application further provides a terminal, including a processor and a communication interface. The processor is configured to determine a second carrier from a plurality of first carriers based on first information of at least some carriers in the plurality of first carriers, where the second carrier is used to determine synchronization information of the second carrier and/or synchronization information of a third carrier; and/or the second carrier is used for sidelink SL transmission. The terminal embodiment corresponds to the foregoing terminal-side method embodiment, and each implementation process and implementation of the foregoing method embodiment can be applied to the terminal embodiment, with the same technical effect achieved.

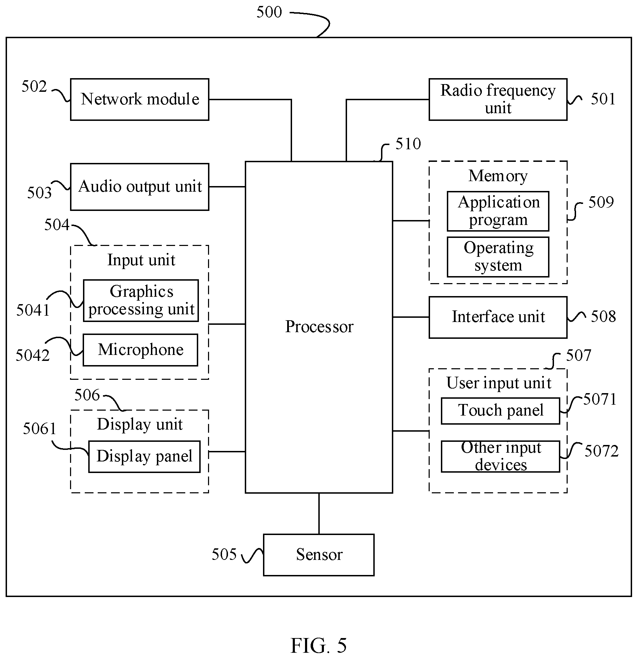

Specifically, FIG. 5 is a schematic diagram of a hardware structure of a terminal for implementing an embodiment of this application.

The terminal 500 includes but is not limited to at least some components such as a radio frequency unit 501, a network module 502, an audio output unit 503, an input unit 504, a sensor 505, a display unit 506, a user input unit 507, an interface unit 508, a memory 509, and a processor 510.

A person skilled in the art may understand that the terminal 500 may further include a power supply (for example, a battery) supplying power to all components. The power supply may be logically connected to the processor 510 through a power management system. In this way, functions such as charge management, discharge management, and power consumption management are implemented by using the power management system. The terminal structure shown in FIG. 5 does not constitute a limitation on the terminal. The terminal may include more or fewer components than those shown in the figure, or some components are combined, or component arrangements are different. Details are not described herein again.

It should be understood that, in this embodiment of this application, the input unit 504 may include a graphics processing unit (Graphics Processing Unit, GPU) 5041 and a microphone 5042. The graphics processing unit 5041 processes image data of a still picture or video obtained by an image capture apparatus (such as a camera) in a video capture mode or an image capture mode. The display unit 506 may include a display panel 5061, and the display panel 5061 may be configured in a form of a liquid crystal display, an organic light-emitting diode, or the like. The user input unit 507 includes at least one of a touch panel 5071 and other input devices 5072. The touch panel 5071 is also referred to as a touchscreen. The touch panel 5071 may include two parts: a touch detection apparatus and a touch controller. The other input devices 5072 may include but are not limited to a physical keyboard, a function button (such as a volume control button or a power button), a trackball, a mouse, and a joystick. Details are not described herein again.

In this embodiment of this application, after receiving downlink data from a network-side device, the radio frequency unit 501 may transmit the downlink data to the processor 510 for processing. In addition, the radio frequency unit 501 may send uplink data to the network-side device. Usually, the radio frequency unit 501 includes but is not limited to an antenna, an amplifier, a transceiver, a coupler, a low noise amplifier, a duplexer, and the like.

The memory 509 may be configured to store software programs or instructions and various data. The memory 509 may primarily include a first storage area for storing programs or instructions and a second storage area for storing data. The first storage area may store an operating system, an application program or instructions required by at least one function (such as an audio play function and an image play function), and the like. In addition, the memory 509 may include a volatile memory or a non-volatile memory, or the memory 509 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synch Link DRAM, SLDRAM), and a direct rambus random access memory (Direct Rambus RAM, DRRAM). The memory 509 in this embodiment of this application includes but is not limited to these and any other suitable types of memories.

The processor 510 may include one or more processing units. Optionally, the processor 510 integrates an application processor and a modem processor. The application processor mainly processes operations related to the operating system, a user interface, an application program, and the like. The modem processor mainly processes a wireless communication signal. For example, the modem processor is a baseband processor. It may be understood that the modem processor may alternatively be not integrated in the processor 510.

The processor 510 is configured to determine a second carrier and/or a plurality of third carriers from a plurality of first carriers based on first information of at least some carriers in the plurality of first carriers, where
the second carrier is used to determine synchronization information of the second carrier and/or synchronization information of a fourth carrier;
the plurality of third carriers are used for sidelink SL transmission;
the plurality of first carriers meet a first condition; and
the plurality of third carriers meet a second condition.

In some possible embodiments, the first condition includes at least one of the following:
synchronization reference orders of at least some carriers are the same, or synchronization reference orders of at least some carriers are different;
synchronization reference priority indication information of at least some carriers is the same, or synchronization reference priority indication information of at least some carriers is the same;
first indication information of at least some carriers is the same, or first indication information of at least some carriers is different;
HARQ configurations of at least some carriers are the same, or HARQ configurations of at least some carriers are different;
PSFCH configurations of at least some carriers are the same, or PSFCH configurations of at least some carriers are different;
SCS configurations of at least some carriers are the same, or SCS configurations of at least some carriers are different;
synchronization resources corresponding to at least some carriers are the same, or synchronization resources corresponding to at least some carriers are different;
start symbols of at least some carriers are the same, or start symbols of at least some carriers are different; and
quantities of symbols occupied by at least some carriers are the same, or quantities of symbols occupied by at least some carriers are different, where

The first indication information is used to indicate at least one of the following:
whether at least one specific synchronization reference needs to be monitored;
whether at least one specific synchronization reference needs to be skipped; and
whether to synchronize directly or indirectly to at least one specific synchronization reference;
the HARQ configuration is used to indicate whether HARQ is enabled;
the PSFCH configuration includes at least one of the following: a period of a PSFCH, a time domain position of the PSFCH, a frequency domain position of the PSFCH, configuration information indicating whether a PSFCH resource is configured, and a minimum interval between data and a corresponding PSFCH for feeding back the data;
the synchronization resource includes at least one of the following: a period of a synchronization signal, a quantity of synchronization slots in the period of the synchronization signal, a quantity of repetitions of the synchronization signal, a synchronization slot offset, a time interval of the synchronization signal, and an SCS; and
the SCS includes at least one of the following: an SCS of the synchronization signal and an SCS of a carrier.

In some possible embodiments, the second condition includes at least one of the following:
synchronization reference orders of at least some carriers are the same;
synchronization reference priority indication information of at least some carriers is the same;
first indication information of at least some carriers is the same;
HARQ configurations of at least some carriers are the same;
PSFCH configurations of at least some carriers are the same;
SCS configurations of at least some carriers are the same;
synchronization resources included in at least some carriers are the same;
start symbols of at least some carriers are the same; and
quantities of symbols occupied by at least some carriers are the same, where

The first indication information is used to indicate at least one of the following:
whether at least one specific synchronization reference needs to be monitored;
whether at least one specific synchronization reference needs to be skipped; and
whether to synchronize directly or indirectly to at least one specific synchronization reference;
the HARQ configuration is used to indicate whether HARQ is enabled;
the PSFCH configuration includes at least one of the following: a period of a PSFCH, a time domain position of the PSFCH, a frequency domain position of the PSFCH, configuration information indicating whether a PSFCH resource is configured, and a minimum interval between data and a corresponding PSFCH for feeding back the data;
the synchronization resource includes at least one of the following: a period of a synchronization signal, a quantity of synchronization slots in the period of the synchronization signal, a quantity of repetitions of the synchronization signal, a synchronization slot offset, a time interval of the synchronization signal, and an SCS; and
the SCS includes at least one of the following: an SCS of the synchronization signal and an SCS of a carrier.

In some possible embodiments, the first information includes at least one of the following:
a synchronization reference order;
synchronization reference priority indication information;
first indication information;
a HARQ configuration;
a PSFCH configuration;
an SCS configuration;
an included synchronization resource;
a start symbol; and
a quantity of occupied symbols.

The first indication information is used to indicate at least one of the following:
whether at least one specific synchronization reference needs to be monitored;
whether at least one specific synchronization reference needs to be skipped; and
whether to synchronize directly or indirectly to at least one specific synchronization reference;
the synchronization reference order includes at least one of the following:
   a priority order or priority group order of synchronization references;
   a priority order of services;
   a priority order of synchronization resources;
   an order of signal strength; and
   an order of searched time points;
   the HARQ configuration is used to indicate whether HARQ is enabled;
   the PSFCH configuration includes at least one of the following: a period of a PSFCH, a time domain position of the PSFCH, a frequency domain position of the PSFCH, configuration information indicating whether a PSFCH resource is configured, and a minimum interval between data and a corresponding PSFCH for feeding back the data;
   the synchronization resource includes at least one of the following: a period of a synchronization signal, a quantity of synchronization slots in the period of the synchronization signal, a quantity of repetitions of the synchronization signal, a synchronization slot offset, a time interval of the synchronization signal, and an SCS; and
   the SCS includes at least one of the following: an SCS of the synchronization signal and an SCS of a carrier.

In some possible embodiments, the plurality of first carriers include at least one of the following:
a plurality of carriers used for CA transmission;
a plurality of carriers used for multi-carrier transmission;
a plurality of carriers used for SL transmission;
a first carrier set;
a second carrier set; and
a third carrier set, where
the second carrier set includes carriers available as synchronization carriers, and the third carrier set includes an available set of synchronization carriers.

In some possible embodiments, the processor 510 is specifically configured to determine the second carrier from the plurality of first carriers based on a first rule, where
the first rule includes at least one of the following:
determining the second carrier based on a selection priority;
determining that a carrier whose signal quality meets the first condition is the second carrier;
determining that a carrier whose searched time point meets the second condition is the second carrier;
determining that a carrier whose synchronization reference type priority meets a third condition is the second carrier;
determining that a carrier whose HARQ configuration is enabled or not enabled is the second carrier;
determining that a carrier whose period in a PSFCH configuration meets a fourth condition is the second carrier;
determining that a carrier whose resource pool meets a fifth condition is the second carrier;
determining that a carrier whose second priority meets a sixth condition is the second carrier; and
determining that a carrier whose synchronization resource meets a seventh condition is the second carrier, where
the second priority includes at least one of the following:
   a priority or priority group of a synchronization reference;
   a priority of a service; and
   a priority of a synchronization resource; and
   the synchronization resource includes at least one of the following:
      a period of a synchronization signal;
      a quantity of synchronization slots in the period of the synchronization signal;
      a quantity of repetitions of the synchronization signal;
      a synchronization slot offset;
      a time interval of the synchronization signal; and
      an SCS, where the SCS includes at least one of the following: an SCS of an S-SSB and an SCS of a carrier.

In some possible embodiments, the carrier meeting the first condition includes at least one of the following:
a carrier with highest signal strength;
a carrier with lowest signal strength; and
a carrier whose signal strength is a first threshold;
   and/or
the carrier meeting the second condition includes at least one of the following:
   a carrier whose searched time point is earliest;
   a carrier whose searched time point is latest; and
   a carrier whose searched time point is a predetermined time point;
      and/or
   the carrier meeting the third condition includes at least one of the following:
      a carrier whose synchronization reference type priority is highest;
      a carrier whose synchronization reference type priority is lowest; and
      a carrier whose synchronization reference type priority is a predetermined synchronization reference priority;
         and/or
      the carrier meeting the fourth condition includes at least one of the following:
         a carrier whose period in a PSFCH configuration is longest;
         a carrier whose period in a PSFCH configuration is shortest; and
         a carrier whose period in a PSFCH configuration is a first predetermined period;
            and/or
         the carrier meeting the fifth condition includes at least one of the following:
            a carrier including at least one resource pool with a PSFCH resource;
            a carrier including at least one resource pool without a PSFCH resource;
               a carrier including resource pools none of which has a PSFCH resource; and
               a carrier including resource pools all of which have PSFCH resources;
                  and/or
               the carrier meeting the sixth condition includes at least one of the following:
                  a carrier whose priority is highest;
                  a carrier whose priority is lowest; and
                  a carrier whose priority is a predetermined priority.

In some possible embodiments, the carrier meeting the seventh condition includes at least one of the following:
a carrier in which a period of a synchronization signal is longest;
a carrier in which a period of a synchronization signal is shortest;
a carrier in which a period of a synchronization signal is a second predetermined period;
a carrier in which a quantity of synchronization slots in a period is largest;
a carrier in which a quantity of synchronization slots in a period is smallest;
a carrier in which a quantity of synchronization slots in a period is a predetermined slot quantity;
a carrier in which a quantity of repetitions of a synchronization signal is largest;
a carrier in which a quantity of repetitions of a synchronization signal is smallest;
a carrier in which a quantity of repetitions of a synchronization signal is a predetermined repetition quantity;
a carrier in which a synchronization slot offset is largest;
a carrier in which a synchronization slot offset is smallest;
a carrier in which a synchronization slot offset is a predetermined offset;
a carrier in which a time interval of a synchronization signal is longest;
a carrier in which a time interval of a synchronization signal is a predetermined time interval;
a carrier whose SCS is largest;
a carrier whose SCS is smallest; and
a carrier whose SCS is a predetermined SCS.

In some possible embodiments, the selection priority is determined based on at least one of the following:
a selection priority relationship; and
a selection priority order.

In some possible embodiments, the determining the second carrier based on a selection priority includes at least one of the following:
determining that a carrier whose selection priority is highest is the second carrier;
determining that a carrier whose selection priority is higher than a first predetermined selection priority is the second carrier;
determining that a carrier whose selection priority is lowest is the second carrier;
determining that a carrier whose selection priority is lower than a second predetermined selection priority is the second carrier; and
determining that a carrier whose selection priority is a third selection priority is the second carrier.

In some possible embodiments, the selection priority is determined based on at least one of the following:
a protocol specification;
a network configuration;
a preconfiguration;
a network indication;
synchronization reference priority indication information;
first indication information;
a synchronization reference order;
a synchronization reference type;
a synchronization parameter configuration mode;
a second priority;
a HARQ configuration;
a PSFCH configuration;
an SCS configuration;
a synchronization resource;
a carrier frequency; and
a carrier index.

In some possible embodiments, the selection priority order is determined based on at least one of the following:
synchronization reference priority indication information;
first indication information;
a synchronization reference order;
a synchronization reference type;
a synchronization parameter configuration mode;
a second priority;
a HARQ configuration;
a PSFCH configuration;
an SCS configuration;
a synchronization resource;
a carrier frequency; and
a carrier index.

In some possible embodiments, the first indication information is used to indicate at least one of the following:
whether at least one specific synchronization reference needs to be monitored;
whether at least one specific synchronization reference needs to be skipped; and
whether to synchronize directly or indirectly to at least one specific synchronization reference;
   and/or
the synchronization reference order includes at least one of the following:
   a priority order or priority group order of synchronization references;
   a priority order of services;
   a priority order of synchronization resources;
   an order of signal strength; and
   an order of searched time points;
      and/or
   the synchronization reference type includes at least one of the following: a gNB, an eNB, a GNSS, UE, and a UE internal clock;
      and/or
   the synchronization parameter configuration mode includes at least one of the following: a network configuration and a preconfiguration;
      and/or
   the second priority includes at least one of the following:
      a priority or priority group of a synchronization reference;
      a priority of a service; and
      a priority of a synchronization resource;
         and/or
      the HARQ configuration is used to indicate whether HARQ is enabled;
         and/or
      the PSFCH configuration includes at least one of the following: a period of a PSFCH, a time domain position of the PSFCH, a frequency domain position of the PSFCH, configuration information indicating whether a PSFCH resource is configured, and a minimum interval between data and a corresponding PSFCH for feeding back the data; and/or
      the synchronization resource includes at least one of the following:
         a period of a synchronization signal;
         a quantity of synchronization slots in the period of the synchronization signal;
         a quantity of repetitions of the synchronization signal;
         a synchronization slot offset;
         a time interval of the synchronization signal; and
         an SCS, where the SCS includes at least one of the following: an SCS of an S-SSB and an SCS of a carrier.

In some possible embodiments, the selection priority order is determined based on at least one of the following:
determined based on a synchronization reference order of a carrier;
determined based on a first order corresponding to an overlapping part in a case that a synchronization reference order of a carrier includes the overlapping part;
determined based on a synchronization reference order corresponding to a non-overlapping part other than an overlapping part in a case that a synchronization reference order of a carrier includes the overlapping part; and
determined based on an arrangement order of carriers.

In some possible embodiments, the selection priority order meets at least one of the following:
a selection priority of a carrier with a high synchronization reference priority is higher than a selection priority of a carrier with a low synchronization reference priority or lower than a selection priority of a carrier with a low synchronization reference priority;
a synchronization reference priority order of a carrier includes an overlapping part, and a selection priority of a carrier with a high synchronization reference priority in the overlapping part is higher than a selection priority of a carrier with a low synchronization reference priority in the overlapping part, or lower than a selection priority of a carrier with a low synchronization reference priority in the overlapping part; and
a synchronization reference priority order of a carrier includes an overlapping part, and a selection priority of a carrier with a high synchronization reference priority in a non-overlapping part other than the overlapping part is higher than a selection priority of a carrier with a low synchronization reference priority in the non-overlapping part, or lower than a selection priority of a carrier with a low synchronization reference priority in the non-overlapping part.

In some possible embodiments, the selection priority order is determined based on at least one of the following:
a selection priority of a carrier with a first synchronization reference is higher or lower than a selection priority of a carrier with a second synchronization reference, where an order of the first synchronization reference is higher than an order of the second synchronization reference, and/or the first synchronization reference is a predetermined synchronization reference;
a selection priority of a carrier with a first HARQ configuration is higher or lower than a selection priority of a carrier with another HARQ configuration different from the first HARQ configuration, where the first HARQ configuration is a predetermined HARQ configuration;
a selection priority of a carrier with a first PSFCH configuration is higher or lower than a selection priority of a carrier with a second PSFCH configuration; and
a selection priority of a carrier with a first SCS is higher or lower than a selection priority of a carrier with a second SCS, where the first SCS is greater than the second SCS, and/or the first SCS is a predetermined SCS.

In some possible embodiments, the first PSFCH configuration and the second PSFCH configuration meet at least one of the following:
a period in the first PSFCH configuration is longer than a period in the second PSFCH configuration;
a period in the first PSFCH configuration is shorter than a period in the second PSFCH configuration;
the first PSFCH configuration is a predetermined PSFCH configuration; and
the carrier with the first PSFCH configuration is a carrier with a PSFCH resource, and the carrier with the second PSFCH configuration is a carrier without a PSFCH resource; or the carrier with the first PSFCH configuration is a carrier without a PSFCH resource, and the carrier with the second PSFCH configuration is a carrier with a PSFCH resource.

In some possible embodiments, the selection priority order is determined based on at least one of the following:
a selection priority of a carrier with a first synchronization signal is higher or lower than a selection priority of a carrier with a second synchronization signal, where a period of the first synchronization signal is longer than a period of the second synchronization signal, and/or the period of the first synchronization signal is a third predetermined period;
a selection priority of a carrier in which a quantity of synchronization slots in a period is a first value is higher or lower than a selection priority of a carrier in which a quantity of synchronization slots in a period is a second value, where the first value is greater than the second value, and/or the first value is a first predetermined value;
a selection priority of a carrier in which a quantity of repetitions of a synchronization signal is a third value is higher or lower than a selection priority of a carrier in which a quantity of repetitions of a synchronization signal is a fourth value, where the third value is greater than the fourth value, and/or the third value is a second predetermined value;
a selection priority of a carrier with a first synchronization slot offset is higher or lower than a selection priority of a carrier with a second synchronization slot offset, where the first synchronization slot offset is greater than the second synchronization slot offset, and/or the first synchronization slot offset is a predetermined synchronization slot offset; and
a selection priority of a carrier with a first time interval of a synchronization signal is higher or lower than a selection priority of a carrier with a second time interval, where the first time interval is longer than the second time interval, and/or the first time interval is a predetermined time interval.

In some possible embodiments, the first carrier set is determined based on at least one of the following:
a carrier in the second carrier set;
a carrier in the third carrier set;
all carriers available for carrier aggregation CA transmission;
a carrier actually used for CA transmission;
a carrier once selected for CA transmission;
all carriers available for multi-carrier transmission;
a carrier actually used for multi-carrier transmission;
a carrier once selected for multi-carrier transmission;
all carriers available for SL transmission;
a carrier actually used for SL transmission;
a carrier once selected for SL transmission; and
a carrier including a synchronization resource, where
the second carrier set includes the carriers available as the synchronization carriers, and the third carrier set includes the available set of synchronization carriers.

In some possible embodiments, the fourth carrier may include at least one of the following:
a carrier in a second carrier set;
a carrier in a third carrier set;
all carriers available for carrier aggregation CA transmission;
a carrier actually used for CA transmission;
a carrier once selected for CA transmission;
all carriers available for multi-carrier transmission;
a carrier actually used for multi-carrier transmission;
a carrier once selected for multi-carrier transmission;
all carriers available for SL transmission;
a carrier actually used for SL transmission;
a carrier once selected for SL transmission; and
a carrier including a synchronization resource, where
the second carrier set includes carriers available as synchronization carriers, and the third carrier set includes an available set of synchronization carriers.

According to the terminal provided in this embodiment of this application, the terminal determines the second carrier and/or the plurality of third carriers from the plurality of first carriers based on the first information of at least some carriers in the plurality of first carriers, where the second carrier is used to determine the synchronization information of the second carrier and/or the synchronization information of the fourth carrier; the plurality of third carriers are used for sidelink SL transmission; the plurality of first carriers meet the first condition; and the plurality of third carriers meet the second condition. By using this method, the terminal may determine the second carrier, and determine the synchronization information of the second carrier and synchronization information of other carriers by using the second carrier, and perform sidelink transmission by using the third carrier, so that timing synchronization of each carrier can be implemented during sidelink data transmission, thereby improving reliability of a communication system.

An embodiment of this application further provides a readable storage medium. The readable storage medium stores a program or instructions. When the program or instructions are executed by a processor, each process of the foregoing embodiment of the carrier determining method is implemented, with the same technical effect achieved. To avoid repetition, details are not described herein again.

The processor is a processor in the terminal in the foregoing embodiment. The readable storage medium includes a computer-readable storage medium, such as a computer read-only memory ROM, a random access memory RAM, a magnetic disk, or an optical disc.

In addition, an embodiment of this application provides a chip. The chip includes a processor and a communication interface. The communication interface is coupled to the processor. The processor is configured to run a program or instructions to implement each process of the foregoing embodiment of the carrier determining method, with the same technical effect achieved. To avoid repetition, details are not described herein again.

It should be understood that the chip provided in this embodiment of this application may also be referred to as a system-level chip, a system chip, a chip system, a system-on-chip, or the like.

In addition, an embodiment of this application provides a computer program or program product. The computer program or program product is stored in a storage medium. The computer program or program product is executed by at least one processor to implement each process of the foregoing embodiment of the carrier determining method, with the same technical effect achieved. To avoid repetition, details are not described herein again.

An embodiment of this application further provides a communication system, including a terminal and a network-side device. The terminal may be configured to perform the steps of the foregoing carrier determining method.

It should be noted that in this specification, the term "include", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary general hardware platform, and certainly may alternatively be implemented by using hardware. However, in most cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners without departing from principles of this application and the protection scope of the claims, and all such manners fall within the protection scope of this application.

## Claims

1. A carrier determining method, wherein the method comprises:
determining, by a terminal, a second carrier and/or a plurality of third carriers from a plurality of first carriers based on first information of at least some carriers in the plurality of first carriers, wherein
the second carrier is used to determine synchronization information of the second carrier and/or synchronization information of a fourth carrier;
the plurality of third carriers are used for sidelink SL transmission;
the plurality of first carriers meet a first condition; and
the plurality of third carriers meet a second condition.

2. The method according to claim 1, wherein
the first condition comprises at least one of the following:
synchronization reference orders of at least some carriers are the same, or synchronization reference orders of at least some carriers are different;
synchronization reference priority indication information of at least some carriers is the same, or synchronization reference priority indication information of at least some carriers is the same;
first indication information of at least some carriers is the same, or first indication information of at least some carriers is different;
HARQ configurations of at least some carriers are the same, or HARQ configurations of at least some carriers are different;
PSFCH configurations of at least some carriers are the same, or PSFCH configurations of at least some carriers are different;
SCS configurations of at least some carriers are the same, or SCS configurations of at least some carriers are different;
synchronization resources corresponding to at least some carriers are the same, or synchronization resources corresponding to at least some carriers are different;
start symbols of at least some carriers are the same, or start symbols of at least some carriers are different; and
quantities of symbols occupied by at least some carriers are the same, or quantities of symbols occupied by at least some carriers are different, wherein
the first indication information is used to indicate at least one of the following:
whether at least one specific synchronization reference needs to be monitored;
whether at least one specific synchronization reference needs to be skipped; and
whether to synchronize directly or indirectly to at least one specific synchronization reference;
the HARQ configuration is used to indicate whether HARQ is enabled;
the PSFCH configuration comprises at least one of the following: a period of a PSFCH, a time domain position of the PSFCH, a frequency domain position of the PSFCH, configuration information indicating whether a PSFCH resource is configured, and a minimum interval between data and a corresponding PSFCH for feeding back the data;
the synchronization resource comprises at least one of the following: a period of a synchronization signal, a quantity of synchronization slots in the period of the synchronization signal, a quantity of repetitions of the synchronization signal, a synchronization slot offset, a time interval of the synchronization signal, and an SCS; and
the SCS comprises at least one of the following: an SCS of the synchronization signal and an SCS of a carrier.

3. The method according to claim 1, wherein
the second condition comprises at least one of the following:
synchronization reference orders of at least some carriers are the same;
synchronization reference priority indication information of at least some carriers is the same;
first indication information of at least some carriers is the same;
HARQ configurations of at least some carriers are the same;
PSFCH configurations of at least some carriers are the same;
SCS configurations of at least some carriers are the same;
synchronization resources comprised in at least some carriers are the same;
start symbols of at least some carriers are the same; and
quantities of symbols occupied by at least some carriers are the same, wherein
the first indication information is used to indicate at least one of the following:
whether at least one specific synchronization reference needs to be monitored;
whether at least one specific synchronization reference needs to be skipped; and
whether to synchronize directly or indirectly to at least one specific synchronization reference;
the HARQ configuration is used to indicate whether HARQ is enabled;
the PSFCH configuration comprises at least one of the following: a period of a PSFCH, a time domain position of the PSFCH, a frequency domain position of the PSFCH, configuration information indicating whether a PSFCH resource is configured, and a minimum interval between data and a corresponding PSFCH for feeding back the data;
the synchronization resource comprises at least one of the following: a period of a synchronization signal, a quantity of synchronization slots in the period of the synchronization signal, a quantity of repetitions of the synchronization signal, a synchronization slot offset, a time interval of the synchronization signal, and an SCS; and
the SCS comprises at least one of the following: an SCS of the synchronization signal and an SCS of a carrier.

4. The method according to claim 1, wherein the first information comprises at least one of the following:
a synchronization reference order;
synchronization reference priority indication information;
first indication information;
a HARQ configuration;
a PSFCH configuration;
an SCS configuration;
a comprised synchronization resource;
a start symbol; and
a quantity of occupied symbols, wherein
the first indication information is used to indicate at least one of the following:
whether at least one specific synchronization reference needs to be monitored;
whether at least one specific synchronization reference needs to be skipped; and
whether to synchronize directly or indirectly to at least one specific synchronization reference;
the synchronization reference order comprises at least one of the following:
a priority order or priority group order of synchronization references;
a priority order of services;
a priority order of synchronization resources;
an order of signal strength; and
an order of searched time points;
the HARQ configuration is used to indicate whether HARQ is enabled;
the PSFCH configuration comprises at least one of the following: a period of a PSFCH, a time domain position of the PSFCH, a frequency domain position of the PSFCH, configuration information indicating whether a PSFCH resource is configured, and a minimum interval between data and a corresponding PSFCH for feeding back the data;
the synchronization resource comprises at least one of the following: a period of a synchronization signal, a quantity of synchronization slots in the period of the synchronization signal, a quantity of repetitions of the synchronization signal, a synchronization slot offset, a time interval of the synchronization signal, and an SCS; and
the SCS comprises at least one of the following: an SCS of the synchronization signal and an SCS of a carrier.

5. The method according to claim 1, wherein the plurality of first carriers comprise at least one of the following:
a plurality of carriers used for CA transmission;
a plurality of carriers used for multi-carrier transmission;
a plurality of carriers used for SL transmission;
a first carrier set;
a second carrier set; and
a third carrier set, wherein
the second carrier set comprises carriers available as synchronization carriers, and the third carrier set comprises an available set of synchronization carriers.

6. The method according to claim 1, wherein
the determining, by a terminal, a second carrier from a plurality of first carriers comprises:
determining, by the terminal, the second carrier from the plurality of first carriers based on a first rule, wherein
the first rule comprises at least one of the following:
determining the second carrier based on a selection priority;
determining that a carrier whose signal quality meets the first condition is the second carrier;
determining that a carrier whose searched time point meets the second condition is the second carrier;
determining that a carrier whose synchronization reference type priority meets a third condition is the second carrier;
determining that a carrier whose HARQ configuration is enabled or not enabled is the second carrier;
determining that a carrier whose period in a PSFCH configuration meets a fourth condition is the second carrier;
determining that a carrier whose resource pool meets a fifth condition is the second carrier;
determining that a carrier whose second priority meets a sixth condition is the second carrier; and
determining that a carrier whose synchronization resource meets a seventh condition is the second carrier, wherein
the second priority comprises at least one of the following:
a priority or priority group of a synchronization reference;
a priority of a service; and
a priority of a synchronization resource; and
the synchronization resource comprises at least one of the following:
a period of a synchronization signal;
a quantity of synchronization slots in the period of the synchronization signal;
a quantity of repetitions of the synchronization signal;
a synchronization slot offset;
a time interval of the synchronization signal; and
an SCS, wherein the SCS comprises at least one of the following: an SCS of an S-SSB and an SCS of a carrier.

7. The method according to claim 6, wherein
the carrier meeting the first condition comprises at least one of the following:
a carrier with highest signal strength;
a carrier with lowest signal strength; and
a carrier whose signal strength is a first threshold;
and/or
the carrier meeting the second condition comprises at least one of the following:
a carrier whose searched time point is earliest;
a carrier whose searched time point is latest; and
a carrier whose searched time point is a predetermined time point;
and/or
the carrier meeting the third condition comprises at least one of the following:
a carrier whose synchronization reference type priority is highest;
a carrier whose synchronization reference type priority is lowest; and
a carrier whose synchronization reference type priority is a predetermined synchronization reference priority;
and/or
the carrier meeting the fourth condition comprises at least one of the following:
a carrier whose period in a PSFCH configuration is longest;
a carrier whose period in a PSFCH configuration is shortest; and
a carrier whose period in a PSFCH configuration is a first predetermined period;
and/or
the carrier meeting the fifth condition comprises at least one of the following:
a carrier comprising at least one resource pool with a PSFCH resource;
a carrier comprising at least one resource pool without a PSFCH resource;
a carrier comprising resource pools none of which has a PSFCH resource; and
a carrier comprising resource pools all of which have PSFCH resources;
and/or
the carrier meeting the sixth condition comprises at least one of the following:
a carrier whose priority is highest;
a carrier whose priority is lowest; and
a carrier whose priority is a predetermined priority.

8. The method according to claim 6, wherein
the carrier meeting the seventh condition comprises at least one of the following:
a carrier in which a period of a synchronization signal is longest;
a carrier in which a period of a synchronization signal is shortest;
a carrier in which a period of a synchronization signal is a second predetermined period;
a carrier in which a quantity of synchronization slots in a period is largest;
a carrier in which a quantity of synchronization slots in a period is smallest;
a carrier in which a quantity of synchronization slots in a period is a predetermined slot quantity;
a carrier in which a quantity of repetitions of a synchronization signal is largest;
a carrier in which a quantity of repetitions of a synchronization signal is smallest;
a carrier in which a quantity of repetitions of a synchronization signal is a predetermined repetition quantity;
a carrier in which a synchronization slot offset is largest;
a carrier in which a synchronization slot offset is smallest;
a carrier in which a synchronization slot offset is a predetermined offset;
a carrier in which a time interval of a synchronization signal is longest;
a carrier in which a time interval of a synchronization signal is a predetermined time interval;
a carrier whose SCS is largest;
a carrier whose SCS is smallest; and
a carrier whose SCS is a predetermined SCS.

9. The method according to claim 6, wherein the selection priority is determined based on at least one of the following:
a selection priority relationship; and
a selection priority order, wherein the selection priority relationship comprises a mapping relationship between at least one selection priority and at least one carrier.

10. The method according to claim 6, wherein the determining the second carrier based on a selection priority comprises at least one of the following:
determining that a carrier whose selection priority is highest is the second carrier;
determining that a carrier whose selection priority is higher than a first predetermined selection priority is the second carrier;
determining that a carrier whose selection priority is lowest is the second carrier;
determining that a carrier whose selection priority is lower than a second predetermined selection priority is the second carrier; and
determining that a carrier whose selection priority is a third selection priority is the second carrier.

11. The method according to claim 6, wherein the selection priority is determined based on at least one of the following:
a protocol specification;
a network configuration;
a preconfiguration;
a network indication;
synchronization reference priority indication information;
first indication information;
a synchronization reference order;
a synchronization reference type;
a synchronization parameter configuration mode;
a second priority;
a HARQ configuration;
a PSFCH configuration;
an SCS configuration;
a synchronization resource;
a carrier frequency; and
a carrier index.

12. The method according to claim 9, wherein the selection priority order is determined based on at least one of the following:
synchronization reference priority indication information;
first indication information;
a synchronization reference order;
a synchronization reference type;
a synchronization parameter configuration mode;
a second priority;
a HARQ configuration;
a PSFCH configuration;
an SCS configuration;
a synchronization resource;
a carrier frequency; and
a carrier index.

13. The method according to claim 11 or 12, wherein
the first indication information is used to indicate at least one of the following:
whether at least one specific synchronization reference needs to be monitored;
whether at least one specific synchronization reference needs to be skipped; and
whether to synchronize directly or indirectly to at least one specific synchronization reference;
and/or
the synchronization reference order comprises at least one of the following:
a priority order or priority group order of synchronization references;
a priority order of services;
a priority order of synchronization resources;
an order of signal strength; and
an order of searched time points;
and/or
the synchronization reference type comprises at least one of the following: a gNB, an eNB, a GNSS, UE, and a UE internal clock;
and/or
the synchronization parameter configuration mode comprises at least one of the following: a network configuration and a preconfiguration;
and/or
the second priority comprises at least one of the following:
a priority or priority group of a synchronization reference;
a priority of a service; and
a priority of a synchronization resource;
and/or
the HARQ configuration is used to indicate whether HARQ is enabled;
and/or
the PSFCH configuration comprises at least one of the following: a period of a PSFCH, a time domain position of the PSFCH, a frequency domain position of the PSFCH, configuration information indicating whether a PSFCH resource is configured, and a minimum interval between data and a corresponding PSFCH for feeding back the data;
and/or
the synchronization resource comprises at least one of the following:
a period of a synchronization signal;
a quantity of synchronization slots in the period of the synchronization signal;
a quantity of repetitions of the synchronization signal;
a synchronization slot offset;
a time interval of the synchronization signal; and
an SCS, wherein the SCS comprises at least one of the following: an SCS of an S-SSB and an SCS of a carrier.

14. The method according to claim 9, wherein the selection priority order is determined based on at least one of the following:
determined based on a synchronization reference order of a carrier;
determined based on a first order corresponding to an overlapping part in a case that a synchronization reference order of a carrier comprises the overlapping part;
determined based on a synchronization reference order corresponding to a non-overlapping part other than an overlapping part in a case that a synchronization reference order of a carrier comprises the overlapping part; and
determined based on an arrangement order of carriers.

15. The method according to claim 9, wherein the selection priority order meets at least one of the following:
a selection priority of a carrier with a high synchronization reference priority is higher than a selection priority of a carrier with a low synchronization reference priority or lower than a selection priority of a carrier with a low synchronization reference priority;
a synchronization reference priority order of a carrier comprises an overlapping part, and a selection priority of a carrier with a high synchronization reference priority in the overlapping part is higher than a selection priority of a carrier with a low synchronization reference priority in the overlapping part, or lower than a selection priority of a carrier with a low synchronization reference priority in the overlapping part; and
a synchronization reference priority order of a carrier comprises an overlapping part, and a selection priority of a carrier with a high synchronization reference priority in a non-overlapping part other than the overlapping part is higher than a selection priority of a carrier with a low synchronization reference priority in the non-overlapping part, or lower than a selection priority of a carrier with a low synchronization reference priority in the non-overlapping part.

16. The method according to claim 9, wherein the selection priority order is determined based on at least one of the following:
a selection priority of a carrier with a first synchronization reference is higher or lower than a selection priority of a carrier with a second synchronization reference, wherein an order of the first synchronization reference is higher than an order of the second synchronization reference, and/or the first synchronization reference is a predetermined synchronization reference;
a selection priority of a carrier with a first HARQ configuration is higher or lower than a selection priority of a carrier with another HARQ configuration different from the first HARQ configuration, wherein the first HARQ configuration is a predetermined HARQ configuration;
a selection priority of a carrier with a first PSFCH configuration is higher or lower than a selection priority of a carrier with a second PSFCH configuration; and
a selection priority of a carrier with a first SCS is higher or lower than a selection priority of a carrier with a second SCS, wherein the first SCS is greater than the second SCS, and/or the first SCS is a predetermined SCS.

17. The method according to claim 16, wherein the first PSFCH configuration and the second PSFCH configuration meet at least one of the following:
a period in the first PSFCH configuration is longer than a period in the second PSFCH configuration;
a period in the first PSFCH configuration is shorter than a period in the second PSFCH configuration;
the first PSFCH configuration is a predetermined PSFCH configuration; and
the carrier with the first PSFCH configuration is a carrier with a PSFCH resource, and the carrier with the second PSFCH configuration is a carrier without a PSFCH resource; or the carrier with the first PSFCH configuration is a carrier without a PSFCH resource, and the carrier with the second PSFCH configuration is a carrier with a PSFCH resource.

18. The method according to claim 9, wherein the selection priority order is determined based on at least one of the following:
a selection priority of a carrier with a first synchronization signal is higher or lower than a selection priority of a carrier with a second synchronization signal, wherein a period of the first synchronization signal is longer than a period of the second synchronization signal, and/or the period of the first synchronization signal is a third predetermined period;
a selection priority of a carrier in which a quantity of synchronization slots in a period is a first value is higher or lower than a selection priority of a carrier in which a quantity of synchronization slots in a period is a second value, wherein the first value is greater than the second value, and/or the first value is a first predetermined value;
a selection priority of a carrier in which a quantity of repetitions of a synchronization signal is a third value is higher or lower than a selection priority of a carrier in which a quantity of repetitions of a synchronization signal is a fourth value, wherein the third value is greater than the fourth value, and/or the third value is a second predetermined value;
a selection priority of a carrier with a first synchronization slot offset is higher or lower than a selection priority of a carrier with a second synchronization slot offset, wherein the first synchronization slot offset is greater than the second synchronization slot offset, and/or the first synchronization slot offset is a predetermined synchronization slot offset; and
a selection priority of a carrier with a first time interval of a synchronization signal is higher or lower than a selection priority of a carrier with a second time interval, wherein the first time interval is longer than the second time interval, and/or the first time interval is a predetermined time interval.

19. The method according to claim 5, wherein the first carrier set is determined based on at least one of the following:
a carrier in the second carrier set;
a carrier in the third carrier set;
all carriers available for carrier aggregation CA transmission;
a carrier actually used for CA transmission;
a carrier once selected for CA transmission;
all carriers available for multi-carrier transmission;
a carrier actually used for multi-carrier transmission;
a carrier once selected for multi-carrier transmission;
all carriers available for SL transmission;
a carrier actually used for SL transmission;
a carrier once selected for SL transmission; and
a carrier comprising a synchronization resource, wherein
the second carrier set comprises the carriers available as the synchronization carriers, and the third carrier set comprises the available set of synchronization carriers.

20. The method according to claim 1, wherein the fourth carrier comprise at least one of the following:
a carrier in a second carrier set;
a carrier in a third carrier set;
all carriers available for carrier aggregation CA transmission;
a carrier actually used for CA transmission;
a carrier once selected for CA transmission;
all carriers available for multi-carrier transmission;
a carrier actually used for multi-carrier transmission;
a carrier once selected for multi-carrier transmission;
all carriers available for SL transmission;
a carrier actually used for SL transmission;
a carrier once selected for SL transmission; and
a carrier comprising a synchronization resource, wherein
the second carrier set comprises carriers available as synchronization carriers, and the third carrier set comprises an available set of synchronization carriers.

21. A carrier determining apparatus, wherein the apparatus comprises:
a determining module, configured to determine a second carrier and/or a plurality of third carriers from a plurality of first carriers based on first information of at least some carriers in the plurality of first carriers, wherein
the second carrier is used to determine synchronization information of the second carrier and/or synchronization information of a fourth carrier;
the plurality of third carriers are used for sidelink SL transmission;
the plurality of first carriers meet a first condition; and
the plurality of third carriers meet a second condition.

22. A terminal, comprising a processor and a memory, wherein the memory stores a program or instructions capable of running on the processor, and when the program or instructions are executed by the processor, the steps of the carrier determining method according to any one of claims 1 to 20 are implemented.

23. A readable storage medium, wherein the readable storage medium stores a program or instructions, and when the program or instructions are executed by a processor, the steps of the carrier determining method according to any one of claims 1 to 20 are implemented.
